# EUROPEAN PATENT SPECIFICATION

(11) **EP 2 800 336 B1**
(45) Date of publication and mention of the grant of the patent: **25.07.2018**
(21) Application number: 14166755.0
(22) Date of filing: 30.04.2014
(51) Int. Cl.: H04L 29/06, H04L 12/701, H04L 29/08

(54) **Processing data**
Datenverarbeitung
Traitement de données

(30) Priority: 30.04.2013 GB 201307811; 03.05.2013 GB 201308080; 03.05.2013 GB 201308078; 17.01.2014 GB 201400841; 28.01.2014 US 201414166819
(43) Date of publication of application: 05.11.2014
(73) Proprietor: Metaswitch Networks Ltd, Enfield, Middlesex EN2 6BQ (GB)
(72) Inventor: Evans, Michael, Enfield, Middlesex EN2 6BQ (GB); Williams, Matthew, Enfield, Middlesex EN2 6BQ (GB); Crampton, Shaun, Enfield, Middlesex EN2 6BQ (GB)
(74) Representative: EIP

(56) References cited:
- WO-A1-2012/149966
- US-A1- 2006 136 557
- US-A1- 2008 240 084
- US-A1- 2008 256 083
- US-A1- 2012 092 997

## Description

### Technical Field

The present invention relates to processing data. In particular, but not exclusively, the present invention relates to processing data in a telecommunication network.

### Background

Internet Protocol (IP) telephony networks, such as those conforming to the IP Multimedia Subsystem (IMS) are currently experiencing an increase in prevalence. In such networks, telephony services are typically provided according to the Session Initiation Protocol (SIP). An IP telephony network may contain a number of network nodes, such as Call Session Control Function (CSCF) entities in the case of IMS, which are responsible for conducting registration procedures, handling routing requests and/or handling service requests in the network. In the context of SIP, such a network node may fulfil the roles of a SIP server and/or SIP proxy. Network nodes must therefore maintain state information (for example routing data, authentication data etc.) for each subscriber that they serve. For relatively small numbers of subscribers, it may be possible for each network node to maintain state information for every subscriber. However, for large numbers of subscribers, the memory requirements for storing state information for every subscriber at each network node and the requirement for replicating the state information between all network nodes in the network can become prohibitive.

In order to cater for larger numbers of subscribers, sharding techniques are known to be employed in IMS networks. Sharding involves allocating a longstanding responsibility for a subset of the subscribers in the telecommunications network to each network node in the network. Each network node therefore need only maintain state information for its allocated subset of subscribers. In a typical example, when a subscriber device registers with the network, it may be allocated to a network node, such as a Serving CSCF (S-CSCF) in the case of IMS, which is thereafter responsible for maintaining the appropriate state information for that subscriber until such time as the device unregisters from the network. However, this approach suffers from increased routing complexity because any messages (for example, requests) relating to a given subscriber that are handled after the initial registration must be routed via the appropriate, sharded network node. Further, the complexity of providing redundancy between sharded network nodes in order to handle failure of an individual network node in the network is increased.

United States patent application no. US-A-2006/136557 describes methods, systems, and computer program products for clustering and communicating between IMS entities are disclosed. According to one aspect, an IMS cluster node includes a S-CSCF for controlling media sessions between IMS users. The cluster node further includes a home subscriber service (HSS) function for storing and providing IMS subscription information to the S-CSCF function. A shared memory is operatively associated with the S-CSCF function and the HSS function. The S-CSCF function obtains IMS subscription information from the HSS function via the shared memory.

International patent application no. WO 2012/149966 A1 describes a method and network entities for enabling server allocation in an IMS-based Multimedia over IP network. The method includes receiving by a S-CSCF server of the network subscriber registration data, transmitting, by the S-CSCF server, information representative of subscriber data to a P-CSCF server and/or to an HSS for storing the information representative of the subscriber data in a memory by the P-CSCF server and/or by the HSS, and transmitting, by the S-CSCF server, a S-CSCF group address to the P-CSCF server and/or to the HSS, respectively, the S-CSCF group address being representative of a group of S-CSCF servers, the S-CSCF server being included in the group of S-CSCF servers.

United States patent application no. US-A-2008/256083 describes a logical network directory database compliant with the X.500 standard for a directory data system. The network directory database provides a source of subscriber and service data accessible by various control and management processes that require subscriber information. The disclosed network directory database may be applied to new and existing services, such as, IMS, Unlicensed Mobile Access (UMA) and other IP services.

United States patent application no. US-A-2008/240084 describes a communication system including an IP phone network, a circuit switched network, and a shared terminal capable of connecting to any one of the IP phone network and the circuit switched network. When the position of the shared terminal is registered or when a call is made from the shared terminal, the subscriber management server of the IP phone network and the subscriber management server of the circuit switched network share subscriber information about the shared terminal, and a call control server of the IP phone network and a call control server of the circuit switched network mediate the call from the shared terminal with the use of the subscriber information.

Hence, it would be desirable to provide improved and/or alternative techniques for handling potentially large numbers of subscribers and/or providing the required network scalability to do so.

### Summary

According to a first aspect of the present invention, there is provided a method of processing data in a telecommunications network, the network comprising:
a cluster of network nodes (106) responsible for conducting registration procedures for subscriber devices;
a subscriber configuration network node (116) responsible for storing subscriber configuration data for a plurality of subscriber devices; and
a cache (112) comprising a shared cache store (114) for caching subscriber configuration data for subscriber devices, the method comprising:
   receiving, from a first network node in the cluster of network nodes, a first subscriber configuration data request requesting subscriber configuration data for a subscriber device within the network;
   in response to receipt of the first subscriber configuration data request, first determining that the shared cache store does not contain subscriber configuration data for the subscriber device;
   in response to the first determination, retrieving subscriber configuration data for the subscriber device from the subscriber configuration network node;
   transmitting the subscriber configuration data for the subscriber device retrieved from the subscriber configuration network node to the first network node, characterised in that:
      the method is performed at a cache comprising a shared cache store which is accessible by each of the network nodes in the cluster of network nodes,
      each node in the cluster of network nodes is also responsible for processing routing data relating to communication sessions conducted in the network, and by:
         storing the subscriber configuration data for the subscriber device retrieved from the subscriber configuration network node in the shared cache store which is accessible by each of the network nodes in the cluster of network nodes;
         receiving, from a second network node in the cluster of network nodes, a second subscriber configuration data request requesting subscriber configuration data for the subscriber device, the second node comprising a different node in the cluster of network nodes to the first network node;
         in response to receipt of the second subscriber configuration data request, second determining that the shared cache store which is accessible by each of the network nodes in the cluster of network nodes does contain subscriber configuration data for the subscriber device;
         in response to the second determination, retrieving subscriber configuration data for the subscriber device from the shared cache store which is accessible by each of the network nodes in the cluster of network nodes; and
         transmitting the subscriber configuration data for the subscriber device retrieved from the shared cache store to the second network node.

According to a second aspect of the present invention, there is provided apparatus for processing data in a telecommunications network, the apparatus comprising a shared cache store (114) for caching subscriber configuration data for subscriber devices, , the apparatus being configured to:
receive, from a first network node in a cluster of network nodes (106) responsible for conducting registration procedures for subscriber devices in the network, a subscriber configuration data request requesting subscriber configuration data for a subscriber device within the network;
first determine, in response to receipt of the first subscriber configuration data request, that the shared cache store does not contain subscriber configuration data for the subscriber device;
retrieve, in response to the first determination, subscriber configuration data for the subscriber device from a subscriber configuration network node (116) responsible for storing subscriber configuration data for a plurality of subscriber devices; and
transmit the subscriber configuration data for the subscriber device retrieved from the subscriber configuration network node to the first network node, characterised in that:
   the shared cache store is accessible by each network node in the cluster of network nodes; and
   each node in the cluster of network nodes is also responsible for processing routing data relating to communication sessions conducted in the network, and in that the apparatus is configured to:
      store the subscriber configuration data for the subscriber device retrieved from the subscriber configuration network node in the shared cache store which is accessible by each of the network nodes in the cluster of network nodes;
      receive, from a second network node in the cluster of network nodes, a second subscriber configuration data request requesting subscriber configuration data for the subscriber device, the second node comprising a different node in the cluster of network nodes to the first network node;
      in response to receipt of the second subscriber configuration data request, second determine that the shared cache store which is accessible by each of the network nodes in the cluster of network nodes does contain subscriber configuration data for the subscriber device;
      in response to the second determination, retrieve subscriber configuration data for the subscriber device from the shared cache store which is accessible by each of the network nodes in the cluster of network nodes; and
      transmit the subscriber configuration data for the subscriber device retrieved from the shared cache store to the second network node.

According to a third aspect of the present invention there is provided a computer program product (for example computer software) adapted to perform the method of the first aspect of the present invention.

According to embodiments of the present invention there is provided a method of processing data in a telecommunications network, the network comprising:
a cluster of network nodes responsible for conducting registration procedures for subscriber devices and processing routing data relating to communication sessions conducted in the network;
a subscriber configuration network node responsible for storing subscriber configuration data for a plurality of subscriber devices; and
a cache comprising a shared cache store for caching subscriber configuration data for subscriber devices, the shared cache store being accessible by each of the network nodes in the cluster of network nodes, the method comprising, at the cache:
   receiving, from a network node in the cluster of network nodes, a registration request requesting registration of a subscriber device with the network;
   determining whether the shared cache store contains subscriber configuration data for the subscriber device;
   in the case of a positive determination, retrieving subscriber configuration data for the subscriber device from the shared cache store and transmitting the subscriber configuration data retrieved from the shared cache store to the network node; and
   in the case of a negative determination, retrieving subscriber configuration data for the subscriber device from the subscriber configuration network node, transmitting the subscriber configuration data retrieved from the subscriber configuration network node to the network node, and storing the subscriber configuration data retrieved from the subscriber configuration network node in the shared cache store.

Embodiments comprise a computer program product comprising a non-transitory computer-readable storage medium having computer readable instructions stored thereon, the computer readable instructions being executable by a computerised device to cause the computerised device to perform the method of the first aspect of the present invention.

Further features and advantages of the invention will become apparent from the following description of preferred embodiments of the invention, given by way of example only, which is made with reference to the accompanying drawings.

### Brief Description of the Drawings

Figure 1 shows an example telecommunications network in which embodiments of the present disclosure may be practiced;
Figure 2 shows an example registration procedure according to embodiments;
Figure 3 shows an example communication setup request procedure according to embodiments
Figure 4 shows an example telecommunications network in which embodiments of the present disclosure may be practiced;
Figure 5 shows an example subscriber configuration data retrieval procedure according to embodiments;
Figure 6 shows an example subscriber configuration data retrieval procedure according to embodiments;
Figure 7 shows an example subscriber configuration data retrieval procedure according to embodiments; and
Figure 8 shows an example telecommunications network in which embodiments of the present disclosure may be practiced.

### Detailed Description

In order to provide efficient scalability of a telephony network, embodiments do not employ a longstanding assignment of a given subscriber to a given network node. Instead, any network node among a plurality of network nodes is enabled to process messages relating to any given subscriber.

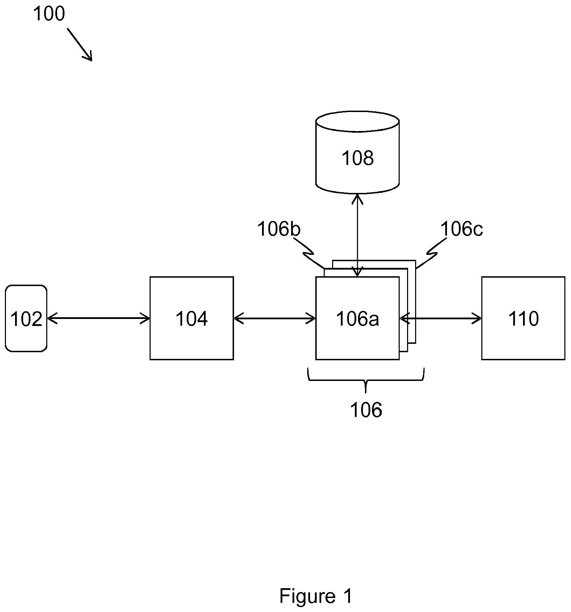

Figure 1 illustrates an example telecommunications network 100 in which embodiments of the present disclosure may be practiced. Telecommunications network 100 comprises a plurality of network nodes 106, which are collectively responsible for conducting registration procedures for subscriber devices and/or processing routing data relating to communication sessions conducted in telecommunications network 100. In this manner, the plurality of network nodes 106 may be referred to as a cluster of network nodes. The cluster of network nodes 106 may comprise nodes performing the functions of one or more CSCFs, SIP Routers, SIP Registrars, SIP Service Nodes, SIP Proxies etc. In Figure 1, the plurality of network nodes 106 is depicted as comprising three network nodes 106a, 106b and 106c. In practice, the plurality of network nodes 106 may comprise further network nodes (not shown), or fewer than the three depicted network nodes.

Subscriber device 102 is configured to conduct telephony sessions via telecommunications network 100. Subscriber device 102 communicates with telecommunications network 100 via edge proxy node 104. The communication link between subscriber device 102 and edge proxy node 104 may further comprise one or more intermediate entities, such as wireless access points, routing devices etc. Edge proxy node 104 may be further responsible for interfacing between telecommunications network 100 and one or more further subscriber devices (not shown). Telecommunications network 100 may also comprise one or more further edge proxy nodes (not shown), each responsible for interfacing between telecommunications network 100 and a number of yet further subscriber devices (not shown). For example, each further edge proxy node may provide access to telecommunications network 100 for subscriber devices in different geographic locations.

The network nodes in the plurality of network nodes in cluster 106 are each configured to access shared registration data store 108 for reading and writing registration data relating to subscribers in telecommunications network 100. Shared registration data store 108 comprises registration data for a plurality of subscriber devices registered with telecommunications network 100, including subscriber device 102, and is accessible by each of the plurality of network nodes in cluster 106. Network nodes 106 are also configured to communicate with entities outside of telecommunications network 100 (i.e. entities in different telecommunications networks; not shown) via border entity 110. In the context of IMS, border entity 110 may, for example, comprise one or more of a Media Gateway Control Function (MGCF) or Interconnection Border Control Function (IBCF).

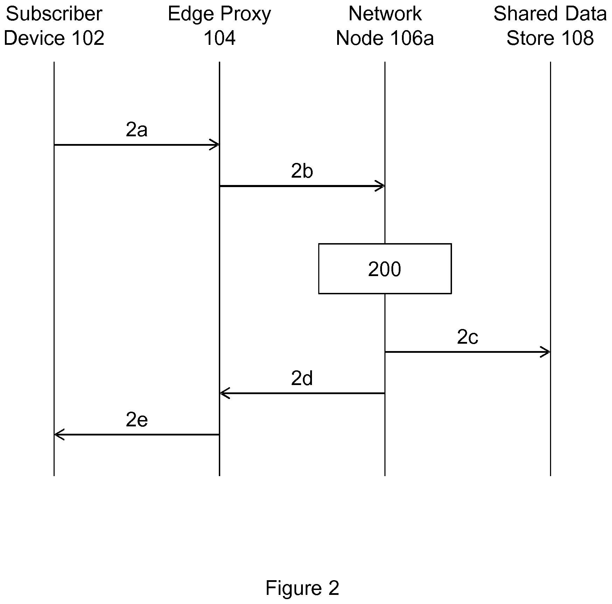

Figure 2 illustrates an example registration procedure according to embodiments. A registration request message 2a is initially sent from subscriber device 102 to edge proxy node 104. In embodiments, registration request message 2a comprises registration data for subscriber device 102. In the case of SIP, registration request message 2a may, for example, comprise a SIP REGISTER request. Transmission of the registration request message may be preceded by establishment (not shown) of a communication channel, for example via the Transmission Control Protocol (TCP), the User Datagram Protocol (UDP) or Websocket, between subscriber device 102 and edge proxy 104.

In response to receiving registration request message 2a, edge proxy 104 allocates the registration request to one of the plurality of network nodes 106, in this case network node 106a. In some embodiments, the choice of network node is made randomly by edge proxy 104. In further embodiments, the choice of network node is made according to one or more load balancing criteria in order to distribute network load across the plurality of network nodes in the cluster 106. In embodiments, the one or more load balancing criteria allow the registration request message to be handled by any of the plurality of network nodes in the cluster 106. The registration request message is then forwarded to the allocated network node 106a as registration request message 2b. Edge proxy 104 may modify the registration request message prior to forwarding it by adding identification information for edge proxy 104 to registration request message 2b. Upon receipt of registration request message 2b, network node 106a may perform an optional authentication procedure as shown by step 200. Such an authentication procedure may comprise contacting a subscriber configuration network node responsible for authenticating subscriber devices in telecommunications network 100. In the case of IMS, the subscriber configuration network node may, for example, comprise a Home Subscriber Server (HSS).

Having authenticated (if appropriate) the subscriber device 102, network node 106a writes the registration data from the received registration request message 2b into shared registration data store 108 at step 2c. In alternative embodiments, prior to writing the registration data into shared registration data store 108, network node 106a may first retrieve registration data for the given subscriber from the shared data store, update the retrieved registration data with the received registration data for that subscriber, and then write the updated registration data back to the shared data store.

Having written the subscriber data to the shared data store, registration confirmation (or 'registration response') message 2d is transmitted from network node 106a to edge proxy 104 (which may be identified by the added identification information in registration request message 2b). The registration confirmation message is then forwarded by edge proxy 104 to subscriber device 102 as registration confirmation message 2e, thereby completing the registration procedure.

In embodiments, the registration procedure is used to establish a relationship (or "binding") between a subscriber identifier and a network address for subscriber device 102. In embodiments, the subscriber identifier comprises a SIP address. In embodiments, the network address comprises one or more of an Internet Protocol (IP) address and a port associated with the subscriber device. Routing path information may also be registered during a registration procedure if required to successfully reach subscriber device 102 (for example to traverse any intermediate network address translation (NAT) entities). The registration data comprised in registration request message 2a may, for example, comprise one or more of the subscriber identifier, the network address for subscriber device 102 and path information.

In embodiments, the subscriber device may be required to perform a periodic re-registration procedure in order to maintain its registration. In some such embodiments, the stored registration data may expire after a predetermined period of time (for example after a previous registration procedure). The re-registration procedure may, for example, comprise the same steps as the aforementioned registration procedure. In embodiments, the optional authentication procedure is performed during the initial registration procedure, but omitted in each subsequent re-registration procedure. In alternative embodiments, the authentication procedure is performed during both the initial registration and one or more subsequent re-registration procedures. In embodiments, since the registration information for subscriber device is stored in shared data store 108, subsequent re-registration requests relating to subscriber device 102 may be handled by any network node in the cluster of network nodes 106. In arrangements where the registration request message 2b is handled by network node 106a, a subsequent re-registration request is handled by a different network node in the cluster 106 (for example, network node 106b).

In some embodiments, multiple subscriber devices may be registered against the same subscriber identifier simultaneously. In some such embodiments, shared registration data store 108 comprises registration and/or binding information for each registered subscriber device. In some embodiments, two or more of the multiple registered subscriber devices correspond to two or more clients located on the same client device; in such embodiments, the two or more clients located on the same client device may be referred to as collocated.

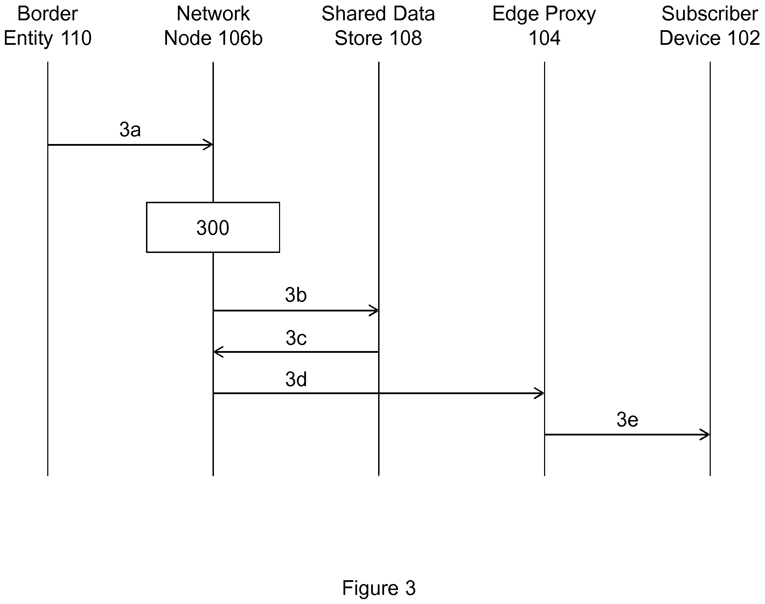

Figure 3 illustrates an example communication setup request procedure according to embodiments. In the example depicted in Figure 3, a communication session setup request message (hereinafter a dialog request message) relating to subscriber device 102 is received from outside of telecommunications network 100 at border entity 110. In the case of SIP, the dialog request message may comprise a SIP INVITE message, used in establishing a communication session between two subscriber devices. In further embodiments, the dialog request message may comprise a SIP MESSAGE message, a SIP SUBSCRIBE message or a SIP PUBLISH message. Border entity 110 allocates the dialog request message request to one of the plurality of network nodes 106, in this case network node 106b. In some embodiments, the choice of network node is made randomly by border entity 110. In further embodiments, the choice of network node is made according to one or more load balancing criteria in order to distribute network load across the plurality of network nodes in cluster 106. In embodiments, the one or more load balancing criteria allow the dialog request message to be handled by any of the plurality of network nodes in the cluster 106. As a result, the dialog request message is forwarded to the allocated network node 106b as dialog request message 3a. In alternative embodiments (not shown), the incoming dialog request message originates from a further subscriber device within telecommunications network 100, in which case, the dialog request message is allocated and forwarded to a network node in the cluster of network nodes 106 by whichever edge proxy the further subscriber device is in communication with.

Having received dialog request message 3a, network node 106b inspects the received dialog request to determine which subscriber device the dialog request relates to (in this case subscriber device 102). Network node 106b may optionally determine one or more filter criteria to apply to the dialog request (for example, to determine whether application servers should be invoked), as shown by step 300. Determination of any such filter criteria may comprise contacting a subscriber configuration network node responsible for storing subscriber configuration data in telecommunications network 100. In the case of IMS, the subscriber configuration network node may, for example, comprise an HSS.

Having optionally determined and/or applied any necessary filter criteria, the routing proxy queries shared registration data store 108 for registration data for subscriber device 102 via request message 3b. As a result of a previous registration procedure (for example, as described in relation to Figure 2), shared registration data store 108 comprises registration data for subscriber device 102, and returns this to network node 106b in response message 3c. Having retrieved the registration data for subscriber device 102 from the shared registration data store, network node 106b can continue to process the dialog request by routing the dialog request message, on the basis of the retrieved registration data for subscriber device 102, to the appropriate edge proxy 104 as dialog request message 3d. Edge proxy 104 then forwards the dialog request message to subscriber device 102 as dialog request message 3e. In some embodiments, in response to routing the dialog request message to the appropriate edge proxy 104, network node 106b also updates (not shown) the registration data for subscriber device 102 in shared registration data store 108.

Hence, it can be seen that by utilising shared registration data store 108, the requirement for a longstanding association between subscriber device 102 and a given network node in the cluster of network nodes 106 is removed, and request messages may be routed to/from subscriber device 102 by any available network node in the cluster 106.

In embodiments, the retrieved registration data listing the appropriate edge proxy 104 may be out of date (for example, if the subscriber device has since disconnected form the network). In such embodiments, the edge proxy 104 may respond to dialog request message 3d by sending a request rejection message (not shown) back to network node 106b indicating that the registration information is out of date. In some such embodiments, in response to receipt of the request rejection message, network node 106b updates the registration data for subscriber device 102 in shared registration data store 108.

In embodiments, shared registration data store 108 further comprises registration data for one or more further subscriber devices associated with the subscriber of subscriber device 102. In such embodiments, registration data for each further subscriber device associated with the subscriber of subscriber device 102 is returned to network node 106b in the response message from shared data store 108. Dialog request messages may then be forwarded to each of these further subscriber devices in addition to subscriber device 102 (via the appropriate edge proxies).

In some arrangements, shared registration data store 108 comprises a clustered registration data store, wherein the data store is distributed among a number of nodes in telecommunications network 100. In embodiments, the registration data stored in shared registration data store 108 is distributed among the cluster of network nodes 106. In such embodiments, a portion of the registration data stored in shared registration data store 108 is stored in memory at two or more or each network node in the cluster of network nodes 106. In embodiments, a first portion of the registration data is stored in memory at network node 106a, and a second, different portion of the registration data is stored in memory at network node 106b.

Hence, during processing at a given network node in the cluster of network nodes 106, any registration data that may be required can be stored either locally at the given network node or remotely on a different network node in the cluster 106. Hence the aforementioned write, request and/or response messages sent to and received from shared registration data store 108 may be sent and received within the given network node, or transmitted externally from the given network node to another node in the cluster, depending on the location of the required registration data. In embodiments, the shared registration data store comprises a distributed memory system such as Memcached™, Infinispan™ or Cloudbase™.

As described in relation to Figures 2 and 3 above, the data processing responsibilities of the cluster of network nodes 106 may comprise contacting a subscriber configuration network node, such as an HSS in the case of IMS. In a conventional telecommunications network, where a longstanding relationship is set up between a given subscriber device and a given network node during a registration procedure, subscriber configuration data retrieved from such a subscriber configuration network node may be stored locally by the given network node in order to prevent successive calls to the subscriber configuration network node if subscriber configuration data for the given subscriber device is required again subsequently. However, as there is no such longstanding relationship in the new architectural arrangement of the present disclosure, storing of data retrieved from the subscriber configuration network node by a network node in the cluster 106 may be inefficient, as the next time the data will likely be required by a different network node. Hence, the new architectural arrangement of the present disclosure may lead to an increase in the frequency of queries to subscriber configuration network nodes. Such an increase in queries to a subscriber configuration network node may negatively impact the performance of the subscriber configuration network node, for example by overloading access resources to/from and/or processing capabilities of the subscriber configuration network node. The new architectural arrangement of the present disclosure may be additionally or alternatively facilitated through the use of a cache comprising a shared cache store for caching subscriber configuration data for subscriber devices.

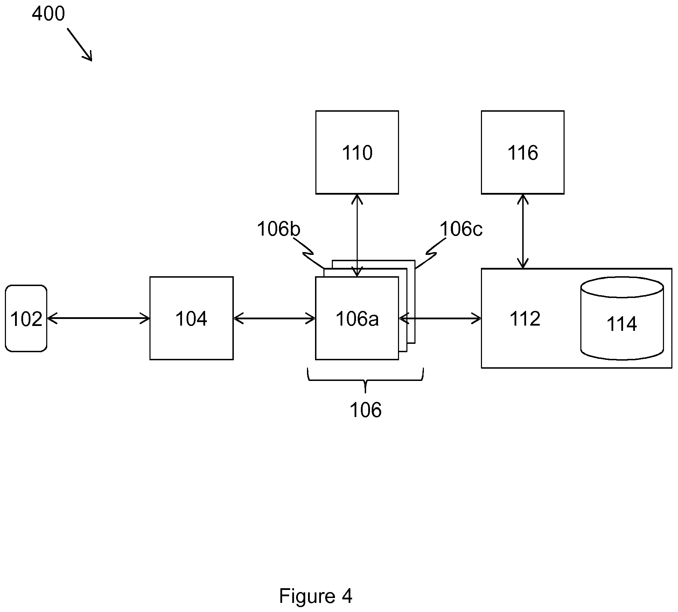

Figure 4 illustrates an example telecommunications network 400 in which embodiments of the present disclosure may be practiced. Telecommunications network 400 comprises subscriber device 102, edge proxy node 104, a cluster of network nodes 106 (comprising network nodes 106a, 106b and 106c) and border entity 110, whose function is analogous to the corresponding entities as previously described in relation to Figure 1. In telecommunications network 400, the plurality of network nodes in cluster 106 are also configured to communicate with cache 112, which comprises a shared cache store 114 for caching subscriber configuration data for subscriber devices in telecommunications network 400. Cache 112 is configured to communicate with subscriber configuration network node 116, which is responsible for storing subscriber configuration data for subscriber devices in telecommunications network 400 (including subscriber device 102). In the case of IMS, subscriber configuration network node 116 may comprise an HSS. In embodiments, the interface between cache 112 and the HSS comprises a Cx interface, as defined in the IMS specifications.

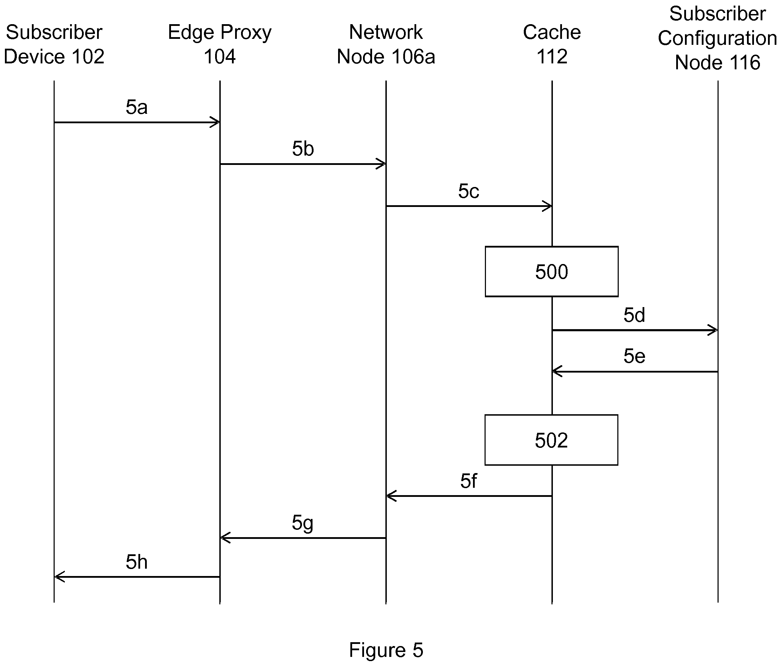

Figure 5 illustrates an example subscriber configuration data retrieval procedure according to embodiments. In the embodiment shown in Figure 5, a subscriber configuration data retrieval procedure is carried out as part of a registration procedure relating to subscriber device 102, such as the one described previously in relation to Figure 2. A registration request message 5a is initially sent from subscriber device 102 to edge proxy node 104. In embodiments, registration request message 5a comprises registration data for subscriber device 102. In the case of SIP, registration request message 5a may for example comprise a SIP REGISTER request. Transmission of the registration request message may be preceded by establishment of a communication channel, for example via the Transmission Control Protocol (TCP), the User Datagram Protocol (UDP) or Websocket, between subscriber device 102 and edge proxy 104 (not shown).

In response to receiving registration request message 5a, edge proxy 104 allocates the registration request to one of the plurality of network nodes 106, in this case network node 106a. In some embodiments, the choice of network node is made randomly by edge proxy 104. In further embodiments, the choice of network node is made according to one or more load balancing criteria in order to distribute network load across the plurality of network nodes in the cluster 106. In embodiments, the one or more load balancing criteria enable handling of the registration request message by any of the plurality of network nodes in the cluster 106. The registration request message is then forwarded to the allocated network node 106a as registration request message 5b. In embodiments, edge proxy 104 maintains a pool of TCP connections each corresponding to one of the plurality of network nodes in cluster 106, where registration request message 5b is transmitted via the TCP connection corresponding to the allocated network node 106a. In embodiments, edge proxy 104 modifies the registration request message 5b prior to forwarding it by adding identification information for edge proxy 104. Upon receipt of registration request message 5b, network node 106a is configured to perform an authentication procedure, which may, for example, comprise issuing one or more authentication challenge messages to subscriber device 102 and receiving one or more authentication responses from subscriber device 102 (not shown), depending on the authentication scheme chosen. In some embodiments, the authentication procedure comprises a SIP digest authentication. In further embodiments, the authentication comprises IMS Authentication and Key Agreement (AKA) authentication. In order to complete the authentication procedure, network node 106a requires subscriber configuration data for subscriber device 102. Network node 106a transmits a subscriber configuration data request 5c to cache 112 in relation to subscriber device 102, on the basis of information received in registration request message 5b.

In response to receipt of subscriber configuration data request 5c, cache 112 determines whether the shared cache store contains subscriber configuration data for subscriber device 102 at step 500. In the embodiments depicted in Figure 5, cache 112 determines that shared cache store 114 does not contain subscriber configuration data for subscriber device 102. In response to determining that shared cache store 114 does not contain subscriber configuration data for subscriber device 102 at step 500, cache 112 retrieves subscriber configuration data for subscriber device 102 from subscriber configuration network node 116. Cache 112 transmits subscriber configuration data request 5d to subscriber configuration network node 116 in relation to subscriber device 102 and receives corresponding subscriber configuration data response 5e which comprises subscriber configuration data for subscriber device 102. In embodiments, subscriber configuration data request 5d and corresponding subscriber configuration data response 5e comprise a Multimedia-Auth-Request and a Multimedia-Auth-Answer respectively (as defined in the IMS specifications). In response to receipt of subscriber configuration data response 5e, cache 112 responds to subscriber configuration data request 5c by transmitting subscriber configuration data retrieval response 5f, which comprises the subscriber configuration data for subscriber device 102, to network node 106a.

In embodiments, the subscriber configuration data for subscriber device 102 comprises authentication data for subscriber device 102. Having received the authentication data for subscriber device 102, network node 106a can complete the authentication procedure with subscriber device 102 as described above. Having completed the authentication procedure for subscriber device 102, the registration procedure may be continued by network node 106a, for example by updating registration information for subscriber device 102 on the basis of the contents of received registration request message 5b (as described previously in relation to Figure 2). Once network node 106 has finished processing the registration request, registration confirmation message 5g is transmitted from network node 106a to edge proxy 104 (which may be identified by the added identification information in registration request message 5b). The registration confirmation message 5g is then forwarded by edge proxy 104 to subscriber device 102 as registration confirmation message 5h, thereby completing the registration procedure.

Hence, subscriber configuration network node 116 need only be contacted if the required subscriber configuration data is not contained in shared cache store 114. In some embodiments, prior to transmitting subscriber configuration data retrieval response 5f, cache 112 writes the subscriber configuration data for subscriber device 102 received in subscriber configuration data retrieval response 5e into shared cache store 114, as shown by step 502. Hence, a subsequent request for subscriber configuration data for subscriber device 102 may be fulfilled without having to re-query subscriber configuration network node 116. In this manner, the number of queries to subscriber configuration network node 116 is reduced, thereby alleviating any negative impact on the performance of subscriber configuration network node 116 which may for example result from overloading of access resources to/from and/or processing capabilities of the subscriber configuration network node 116.

Whilst in the embodiments described in relation to Figure 5, the required subscriber configuration data for subscriber device 102 was not contained in shared cache store 114, in alternative embodiments, the required subscriber configuration data for subscriber device 102 is contained in shared cache store 114, for example as a result of a previous caching procedure. In such cases, the required subscriber configuration data for subscriber device 102 is retrieved from shared cache store 114 instead, and may therefore be transmitted to network node 106a without the need to query subscriber configuration network node 116 again.

In embodiments, subscriber device 102 may be required to perform a periodic re-registration procedure in order to maintain its registration. In some such embodiments, the authentication procedure is not performed during re-registration procedure following an initial registration procedure in which the authentication procedure was successfully completed. In alternative embodiments, the authentication procedure is performed during both the initial registration and subsequent re-registration procedures.

In some embodiments, such as when the interface between cache 112 and subscriber configuration network node 116 is a Cx interface according to the IMS specifications, the interface between cache 112 and subscriber configuration network node 116 facilitates a registration in relation to the requested subscriber registration data. In such embodiments, after subscriber data for subscriber device 102 is retrieved from subscriber configuration network node 116 by cache 112, any updates made to the subscriber configuration data stored in subscriber configuration network node 116 are notified to cache 112 through the transmission of a notification from subscriber configuration network node 116 to cache 112. In embodiments, the notification comprises the updated subscriber configuration data for subscriber 102. In alternative embodiments, cache 112 retrieves the updated subscriber configuration data for subscriber 102 from subscriber configuration network node 116 in response to receipt of the notification. In embodiments the updated subscriber configuration data comprises one or more of subscriber profile information and one or more initial filter criteria. In embodiments, in response to receipt of the updated subscriber configuration data for subscriber 102, cache 112 stores the updated subscriber configuration data for subscriber 102 in shared cache store 114. Hence, subsequent requests for subscriber configuration data for subscriber 102 received at cache 112 return the updated subscriber configuration data for subscriber 102. In some embodiments, there is a limited period of time in which subscriber configuration network node 116 will notify cache 112 of changes made to the subscriber configuration data stored at subscriber configuration network node 116 in relation to subscriber device 102 following the retrieval of the subscriber configuration data. In embodiments, the expiry time of this time period is stored alongside the corresponding subscriber configuration data in shared cache store 114. According to embodiments, after the expiration of this registration, the corresponding subscriber configuration data in the shared cache store 114 is also expired, such that any subsequent request for that subscriber configuration data results in a new query being sent from cache 112 to subscriber configuration network node 116, and does not return the potentially outdated (i.e. expired) subscriber configuration data from shared cache store 114.

In embodiments, the subscriber configuration data retrieved from subscriber configuration network node 116 and/or stored in shared cache store 114 comprises one or more initial filter criteria (IFC). An initial filter criteria represents a subscription of a subscriber to a given application, and may, for example, define a specific application server that should be invoked in relation to communication sessions with the given subscriber device. In embodiments, the subscriber configuration data retrieved from subscriber configuration network node 116 and/or stored in shared cache store 114 comprises subscriber profile information. Subscriber profile information may for example include user related data, group lists, user service related information, user location information and/or charging information.

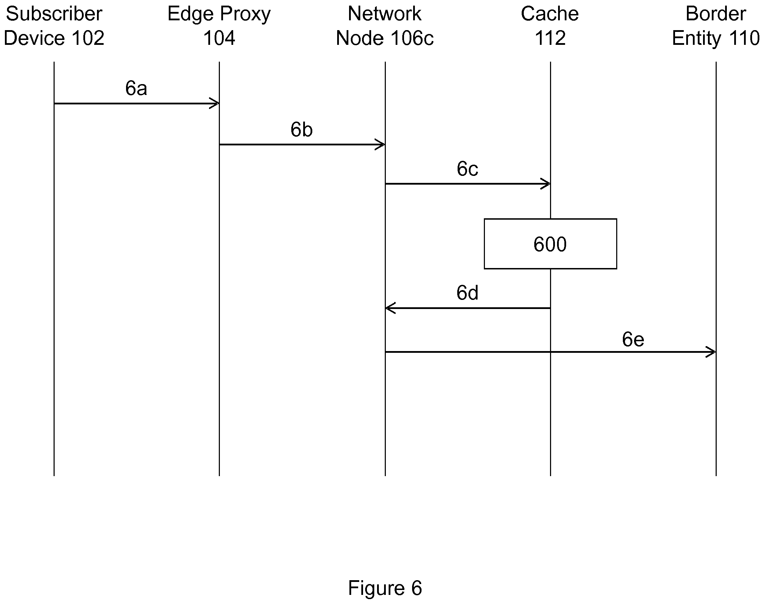

Figure 6 illustrates an example subscriber configuration data retrieval procedure according to embodiments. In the embodiment shown in Figure 6, the subscriber configuration data retrieval procedure is carried out as part of a communication session setup procedure between subscriber device 102 and a remote subscriber device (not shown) within or outside telecommunications network 400. A communication session setup request message 6a (hereinafter a dialog request message) is transmitted from subscriber device 102 to edge proxy 104. In the case of SIP, the dialog request message may comprise a SIP INVITE message, used in establishing a communication session between two (or more) subscriber devices. Edge proxy 104 allocates the dialog request to one of the plurality of network nodes 106, in this case network node 106c. In some embodiments, the choice of network node is made randomly by edge proxy 104. In further embodiments, the choice of network node is made according to one or more load balancing criteria in order to distribute network load across the plurality of network nodes in the cluster 106. In embodiments, the one or more load balancing criteria enable handling of the dialog request message by any of the plurality of network nodes in the cluster 106. As a result, the dialog request message is forwarded to the allocated network node 106c as dialog request message 6b.

Having received dialog request message 6b, network node 106b inspects the received dialog request to determine which subscriber the dialog request relates to (in this case the subscriber of subscriber device 102). Network node 106c then performs a filtering procedure to determine and/or apply one or more initial filter criteria to the dialog request. In order to complete the filtering procedure, network node 106c requires subscriber configuration data for subscriber device 102. Network node 106c transmits a subscriber configuration data retrieval request 6c to cache 112 in relation to subscriber device 102, on the basis of information received in dialog request message 6b.

In response to receipt of subscriber configuration data retrieval request 6c, the cache determines whether the shared cache store contains subscriber configuration data for subscriber device 102 at step 600. In the embodiments depicted in Figure 6, cache 112 determines that shared cache store 114 does contain subscriber configuration data for subscriber device 102, for example as a result of a recent/previous registration procedure carried out in relation to subscriber device 102. In embodiments, the previous registration processing was performed by a network node in cluster 106 other than network node 106c. In response to determining that shared cache store 114 does contain subscriber configuration data for subscriber device 102 at step 600, cache 112 retrieves subscriber configuration data for subscriber device 102 from shared cache store 114 and transmits the retrieved subscriber configuration data to network node 106c in subscriber configuration data retrieval response 6d.

In embodiments, the retrieved subscriber configuration data for subscriber device 102 comprises initial filter criteria for subscriber device 102. Having received the initial filter criteria for subscriber device 102, network node 106c can complete the filtering procedure for the dialog request by applying any necessary filters and/or invoking any required application servers etc. as described above. Having completed the filtering procedure for subscriber device 102, processing of the communication session setup can be continued by network node 106c, for example through transmission of dialog request message 6e from network node 106c to border entity 110 (which may then forward the dialog request message to one or more further entities within or outside of telecommunications network 400, including the remote subscriber device).

Hence, as the required subscriber configuration data for subscriber device 102 is contained in shared cache store 114, a further query to subscriber configuration network node 116 is avoided. Whilst in the embodiments described in relation to Figure 6, the required subscriber configuration data for subscriber device 102 was contained in shared cache store 114, in alternative embodiments, the required subscriber configuration data for subscriber device 102 is not contained in shared cache store 114, in which case it is retrieved from subscriber configuration network node 116 as described previously in relation to Figure 5. In some embodiments, the required subscriber configuration data for a communication session setup procedure is retrieved by cache 112 from subscriber configuration network node 116 via a Server-Assignment-Request message and a Server-Assignment-Answer message (as defined in the IMS specifications) transmitted to and received from subscriber configuration network node 116 respectively. In further embodiments, the required subscriber configuration data for subscriber device 102 contained within shared cache store 114 may have expired (i.e. an expiry time associated with the subscriber configuration data has expired), in which case it is retrieved from subscriber configuration network node 116 as described above. In embodiments, in response to retrieving the subscriber configuration data for subscriber device 102 from subscriber configuration network node 116, the associated expiry time for newly retrieved subscriber configuration data for subscriber device 102 is reset.

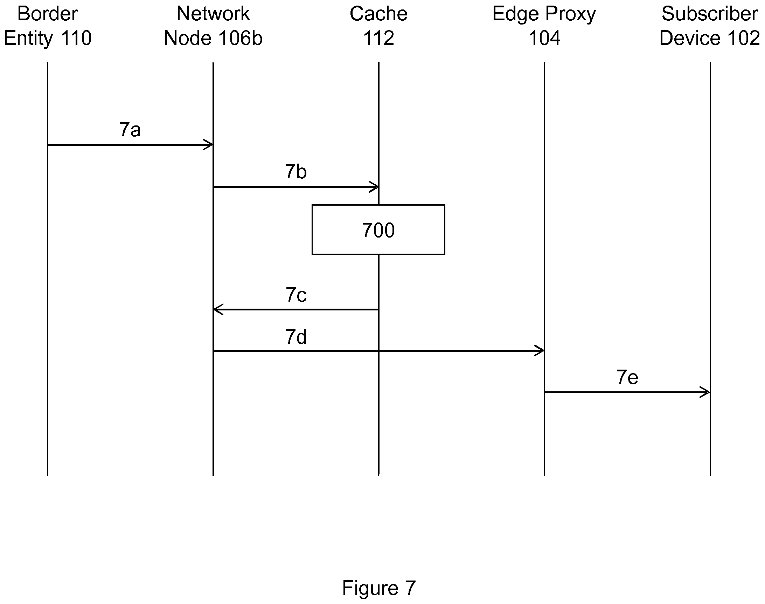

Figure 7 illustrates an example subscriber configuration data retrieval procedure according to embodiments. In the embodiment shown in Figure 7, the subscriber configuration data retrieval procedure is carried out as part of a communication session setup procedure from a remote subscriber device (not shown) outside telecommunications network 400 to subscriber device 102. A dialog request message relating to subscriber device 102 is received from outside telecommunications network 400 at border entity 110. Border entity 110 allocates the dialog request message request to one of the plurality of network nodes 106, in this case network node 106b. In some embodiments, the choice of network node is made randomly by border entity 110. In further embodiments, the choice of network node is made according to one or more load balancing criteria in order to distribute network load across the plurality of network nodes in the cluster 106. In embodiments, the one or more load balancing criteria enable handling of the dialog request message by any of the plurality of network nodes in the cluster 106. As a result, the dialog request message is forwarded to the allocated network node 106b as dialog request message 7a. In alternative embodiments (not shown), the incoming dialog request message may originate from a further subscriber device within telecommunications network 400, in which case, the dialog request message is allocated and forwarded to a network node in the cluster of network nodes 106 by whichever edge proxy is associated with the further subscriber device.

Having received dialog request message 7a, network node 106b inspects the received dialog request to determine which subscriber the dialog request relates to (in this case the subscriber of subscriber device 102). Network node 106b then performs a filtering procedure to determine and/or apply one or more initial filter criteria to the dialog request. In order to complete the filtering procedure, network node 106b requires subscriber configuration data for subscriber device 102. Network node 106b transmits a subscriber configuration data retrieval request 7b to cache 112 in relation to subscriber device 102, on the basis of information received in dialog request message 7a.

In response to receipt of subscriber configuration data retrieval request 7b, cache 112 determines whether the shared cache store contains subscriber configuration data for subscriber device 102 at step 700. In the embodiments depicted in Figure 7, cache 112 determines that shared cache store 114 does contain subscriber configuration data for subscriber device 102, for example as a result of a recent registration procedure carried out in relation to subscriber device 102. In embodiments, the registration procedure was performed by a network node in cluster 106 other than network node 106b. In response to determining that shared cache store 114 does contain subscriber configuration data for subscriber device 102 at step 700, cache 112 retrieves subscriber configuration data for subscriber device 102 from shared cache store 114 and transmits the retrieved configuration data to network node 106b in subscriber configuration data retrieval response 7c.

In embodiments, the subscriber configuration data for subscriber device 102 comprises initial filter criteria for subscriber device 102. Having received the initial filter criteria for subscriber device 102, network node 106b can complete the filtering procedure for the dialog request by applying any necessary filters and/or invoking any required application servers etc. as described above. Having completed the filtering procedure for subscriber device 102, processing of the communication session setup can be continued, by retrieving registration data for subscriber device 102 (for example as described previously in relation to Figure 3). Having retrieved registration data for subscriber device 102, network node 106b transmits dialog request message 7d to the appropriate edge proxy (for example as identified in the retrieved registration data), in this case edge proxy 104. Edge proxy 104 continues the communication session setup procedure by forwarding the dialog request message to subscriber device 102 as dialog request message 7e.

Again, as the required subscriber configuration data for subscriber device 102 is contained in shared cache store 114, a query to subscriber configuration network node 116 has been avoided. Whilst in the embodiments described in relation to Figure 7, the required subscriber configuration data for subscriber device 102 was contained in shared cache store 114, in alternative embodiments, the required subscriber configuration data for subscriber device 102 is not contained in shared cache store 114, in which case it can be retrieved from subscriber configuration network node 116 as described previously in relation to Figures 5 and 6.

In embodiments, shared cache store 114 comprises a clustered cache store, wherein the subscriber configuration data comprised in shared cache store 114 is distributed among a number of nodes in telecommunications network 400. In embodiments, the subscriber configuration data stored in shared cache store 114 is distributed among the cluster of network nodes 106. In such embodiments, a portion of the subscriber configuration data stored in shared cache store 114 is stored in memory at two or more or each network node in the cluster of network nodes 106. In embodiments, a first portion of the registration data stored in memory at network node 106a, and a second, different portion of the registration data is stored in memory at network node 106b.

Hence, during processing at a given network node in the cluster of network nodes 106, any subscriber configuration data that may be required may be stored either locally at the given network node or remotely on a different network node in the cluster 106. Hence the aforementioned write, request and/or response messages sent to and received from shared cache store 114 may be sent and received within the given network node, or transmitted externally from the given network node to another node in the cluster, depending on the location of the required registration data. In embodiments, the shared registration data store comprises a key-value data store, for example Apache Cassandra™.

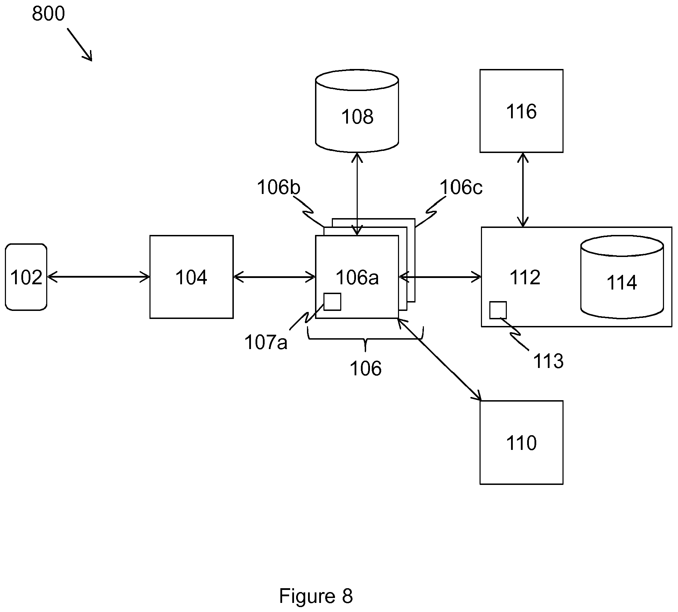

Figure 8 illustrates an example telecommunications network 800 in which embodiments of the present disclosure may be practiced. Telecommunications network 800 comprises subscriber device 102, edge proxy node 104, cluster of network nodes 106 (comprising network nodes 106a, 106b and 106c), shared registration data store 108 and border entity 110, whose functions are analogous to the corresponding entities as previously described in relation to Figure 1, as well as cache 112, shared cache store 114 and subscriber configuration network node 116, whose functions are analogous to the corresponding entities as previously described in relation to Figure 4. In embodiments, each network node in the plurality of network nodes 106 comprises a processor or processing system, as depicted by processor 107a comprised within network node 106a. In further embodiments, cache 112 comprises processor or processing system 113. Each network node and/or cache as described in relation to any of the embodiments described above may similarly comprise a processor and/or processing system.

One or more of the aspects of the embodiments described herein with reference to the drawings comprise processes performed by one or more network nodes 106 and/or cache 112. In embodiments, the one or more network nodes 106 and/or cache 112 comprise one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device; etc.

The distributed nodes discussed in the above embodiments, such as clustered network nodes 100, the distributed shared registration data store and/or the distributed shared cache store may be distributed across a number of systems, either real physical systems or virtual machines, such as those comprised within a virtualized data centre or public or private cloud. In this way the system can scale horizontally to support a large number of users. In embodiments, each network node in cluster 106 may each provide both SIP registrar and SIP routing proxy functions. In alternative embodiments, separate subsets of nodes may be provided for each of these functions, wherein both subsets are configured to access the shared registration data store. Cache 112 may similarly comprise a real physical system, a virtual machine such as those comprised within a virtualized data centre or public or private cloud, or a computerised function or service component comprised within another node in the telecommunications network. Memory, as referred to in the context of shared registration data store 104 and/or the shared cache store 114 may comprise any suitable storage medium, including solid-state drives (SSD) or other semiconductor-based RAM; a ROM, for example a CD ROM or a semiconductor ROM; or a magnetic recording medium, for example a floppy disk or hard disk.

The above embodiments are to be understood as illustrative examples of the invention. Further embodiments of the invention are envisaged. For example, whilst the above embodiments have been described in the context of an IMS network, the present disclosure may be similarly applied to other telecommunications networks, in particular those utilising the Internet Protocol (IP). It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of processing data in a telecommunications network, the network comprising:
a cluster of network nodes (106) responsible for conducting registration procedures for subscriber devices;
a subscriber configuration network node (116) responsible for storing subscriber configuration data for a plurality of subscriber devices; and
a cache (112) comprising a shared cache store (114) for caching subscriber configuration data for subscriber devices, the method comprising:
receiving, from a first network node in the cluster of network nodes, a first subscriber configuration data request requesting subscriber configuration data for a subscriber device within the network;
in response to receipt of the first subscriber configuration data request, first determining that the shared cache store does not contain subscriber configuration data for the subscriber device;
in response to the first determination, retrieving subscriber configuration data for the subscriber device from the subscriber configuration network node;
transmitting the subscriber configuration data for the subscriber device retrieved from the subscriber configuration network node to the first network node, **characterised in that**:
the method is performed at a cache comprising a shared cache store which is accessible by each of the network nodes in the cluster of network nodes,
each node in the cluster of network nodes is also responsible for processing routing data relating to communication sessions conducted in the network, and by:
storing the subscriber configuration data for the subscriber device retrieved from the subscriber configuration network node in the shared cache store which is accessible by each of the network nodes in the cluster of network nodes;
receiving, from a second network node in the cluster of network nodes, a second subscriber configuration data request requesting subscriber configuration data for the subscriber device, the second node comprising a different node in the cluster of network nodes to the first network node;
in response to receipt of the second subscriber configuration data request, second determining that the shared cache store which is accessible by each of the network nodes in the cluster of network nodes does contain subscriber configuration data for the subscriber device;
in response to the second determination, retrieving subscriber configuration data for the subscriber device from the shared cache store which is accessible by each of the network nodes in the cluster of network nodes; and
transmitting the subscriber configuration data for the subscriber device retrieved from the shared cache store to the second network node.

2. A method according to claim 1, comprising:
receiving, from the subscriber configuration network node, a notification that subscriber configuration data for a given subscriber device has been updated at the subscriber configuration network node;
in response to the notification, retrieving the updated subscriber configuration data for the given subscriber device from the subscriber configuration network node; and
storing the updated subscriber configuration data for the given subscriber device retrieved from the subscriber configuration network node in the shared cache store.

3. A method according to claim 2, wherein the notified updated subscriber configuration data comprises at least one of subscriber profile information and one or more initial filter criteria.

4. A method according to any preceding claim, wherein the shared cache store comprises a clustered cache store wherein at least a first portion of the subscriber configuration data in the clustered cache store is stored in memory of a first node in the telecommunications network and at least a second, different portion of the subscriber configuration data in the clustered cache store is stored in memory of a second, different node in the telecommunications network.

5. A method according to claim 4, wherein the first node in the telecommunications network comprises a given node in the cluster of network nodes and the second node in the telecommunications network comprises a different given node in the cluster of network nodes.

6. A method according to claim 4 or 5, wherein subscriber configuration data for the subscriber device in the clustered cache store is stored in memory of the network node, in memory of the further network node or in memory of a different network node to the network node and further network node in the cluster of network nodes.

7. A method according to any preceding claim, wherein the subscriber configuration data comprises authentication data for use in conducting an authentication procedure in relation to the subscriber device.

8. A method according to claim 7, comprising determining whether the shared cache store contains authentication data for the subscriber device,
wherein in the case of determining that the shared cache store does not contain authentication data for the subscriber device, the method comprises retrieving authentication data for the subscriber device from the subscriber configuration network node, the transmitted subscriber configuration data comprising at least the authentication data for the subscriber device retrieved from the subscriber configuration network node,
wherein in the case of determining that the shared cache store does contain authentication data for the subscriber device, the method comprises retrieving authentication data for the subscriber device from the shared cache store, the transmitted subscriber configuration data comprising at least the authentication data for the subscriber device retrieved from the shared cache store.

9. A method according to claims 7 or 8, wherein the authentication procedure comprises one or more of a Session Initiation Protocol, SIP, digest authentication procedure and an Internet Protocol Multimedia Subsystem, IMS, Authentication and Key Agreement, AKA, authentication.

10. A method according to any preceding claim, wherein the received subscriber configuration data request is associated with registration of the subscriber device with the network.

11. A method according to any preceding claim, comprising:
receiving, from a further network node in the cluster of network nodes, a further subscriber configuration data request associated with re-registration of the subscriber device with the network;
in response to receipt of the further subscriber configuration data request, determining that the shared cache store does contain subscriber configuration data for the subscriber device;
in response to the determination, retrieving subscriber configuration data for the subscriber device from the shared cache store; and
transmitting the subscriber configuration data for the subscriber device retrieved from the shared cache store to the further network node.

12. A method according to claim 11, wherein the further network node comprises a different node to the first network node in the cluster of network nodes.

13. A method according to any of claims 1 to 10, comprising receiving, from a further network node in the cluster of network nodes, a further subscriber configuration data request associated with re-registration of the subscriber device with the network, wherein no authentication procedure for the subscriber device is conducted in association with re-registration of the subscriber device with the network.

14. A method according to any preceding claim, wherein the subscriber configuration data comprises one or more initial filter criteria for use in a communication session setup request relating to the subscriber device, the method comprising:
determining whether the shared cache store contains one or more initial filter criteria for the subscriber device;
wherein in the case of further determining that the shared cache store does not contain one or more initial filter criteria for the subscriber device, the method comprises retrieving one or more initial filter criteria for the subscriber device from the subscriber configuration network node, the transmitted subscriber configuration data comprising at least the retrieved one or more initial filter criteria for the subscriber device,
wherein in the case of further determining that the shared cache store does contain one or more initial filter criteria for the subscriber device, the method comprises retrieving one or more initial filter criteria for the subscriber device from the shared cache store, the transmitted the subscriber configuration data comprising at least the retrieved one or more initial filter criteria for the subscriber device.

15. A method according to claim 14, wherein the yet further network node comprises a different node to the first network node and/or the further network node in the cluster of network nodes.

16. A method according to claims 8 or 14, wherein in the case of determining that the shared cache store does contain authentication data for the subscriber device or further determining that the shared cache store does contain one or more initial filter criteria data for the subscriber device, the method comprises identifying whether an expiry time associated with the subscriber configuration data for the subscriber device retrieved from the shared cache store has expired,
wherein in the case of the identification identifying that the expiry time associated with the subscriber configuration data for the subscriber device retrieved from the shared cache store has expired, the method comprises retrieving non-expired subscriber configuration data for the subscriber device from the subscriber configuration network node and transmitting the non-expired subscriber configuration data for the subscriber device retrieved from the subscriber configuration network node to the yet further network node instead of transmitting the expired subscriber configuration data for the subscriber device retrieved from the shared cache store to the yet further network node.

17. A method according to claim 16, comprising storing the non-expired subscriber configuration data in place of the expired subscriber configuration data in the shared cache store and resetting the associated expiry time for the stored non-expired subscriber configuration data.

18. A method according to any of claims 14 to 17, wherein the communication session setup request comprises a request to setup an outgoing communication session from the subscriber device.

19. A method according to any of claims 14 to 17, wherein the communication session setup request comprises a request to setup an incoming communication session to the subscriber device.

20. A method according to any preceding claim, wherein the network comprises an Internet Protocol Multimedia Subsystem, IMS, network and the subscriber configuration network node comprises a Home Subscriber Server, HSS.

21. A method according to claim 20, wherein subscriber configuration data is retrieved from the HSS via an IMS Cx interface between the HSS and the cache.

22. A method according to any preceding claim, wherein the subscriber configuration data stored in the subscriber configuration network node and/or the shared cache store comprises one or more of:
authentication data,
user profile information, and
one or more initial filter criteria.

23. A method according to any preceding claim, wherein one or more of the registration request and the further registration request comprise Session Initiation Protocol, SIP, REGISTER messages.

24. A method according to any preceding claim, wherein one or more of the nodes in the cluster of network nodes comprise Session Initiation Protocol, SIP, router, service and/or registrar nodes.

25. A method according to any of claims 14 to 24, wherein the communication session setup request comprises one or more of a Session Initiation Protocol, SIP, INVITE message, a SIP MESSAGE message, a SIP SUBSCRIBE message and a SIP PUBLISH message.

26. Apparatus for processing data in a telecommunications network, the apparatus comprising a shared cache store (114) for caching subscriber configuration data for subscriber devices, the apparatus being configured to:
receive, from a first network node in a cluster of network nodes (106) responsible for conducting registration procedures for subscriber devices in the network, a subscriber configuration data request requesting subscriber configuration data for a subscriber device within the network;
first determine, in response to receipt of the first subscriber configuration data request, that the shared cache store does not contain subscriber configuration data for the subscriber device;
retrieve, in response to the first determination, subscriber configuration data for the subscriber device from a subscriber configuration network node (116) responsible for storing subscriber configuration data for a plurality of subscriber devices; and
transmit the subscriber configuration data for the subscriber device retrieved from the subscriber configuration network node to the first network node, **characterised in that**:
the shared cache store is accessible by each network node in the cluster of network nodes; and
each node in the cluster of network nodes is also responsible for processing routing data relating to communication sessions conducted in the network, and **in that** the apparatus is further configured to:
store the subscriber configuration data for the subscriber device retrieved from the subscriber configuration network node in the shared cache store which is accessible by each of the network nodes in the cluster of network nodes;
receive, from a second network node in the cluster of network nodes, a second subscriber configuration data request requesting subscriber configuration data for the subscriber device, the second node comprising a different node in the cluster of network nodes to the first network node;
in response to receipt of the second subscriber configuration data request, second determine that the shared cache store which is accessible by each of the network nodes in the cluster of network nodes does contain subscriber configuration data for the subscriber device;
in response to the second determination, retrieve subscriber configuration data for the subscriber device from the shared cache store which is accessible by each of the network nodes in the cluster of network nodes; and
transmit the subscriber configuration data for the subscriber device retrieved from the shared cache store to the second network node.

27. A computer program product comprising a set of instructions, which, when executed by a computerised device is configured to cause the computerised device to perform a method of processing data in a telecommunications network, the network comprising:
a cluster of network nodes (106) responsible for conducting registration procedures for subscriber devices;
a subscriber configuration network node (116) responsible for storing subscriber configuration data for a plurality of subscriber devices; and
a cache (112) comprising a shared cache store (114) for caching subscriber configuration data for subscriber devices, the method comprising:
receiving, from a first network node in the cluster of network nodes, a first subscriber configuration data request requesting subscriber configuration data for a subscriber device within the network;
in response to receipt of the first subscriber configuration data request, first determining that the shared cache store does not contain subscriber configuration data for the subscriber device;
in response to the first determination, retrieving subscriber configuration data for the subscriber device from the subscriber configuration network node;
transmitting the subscriber configuration data for the subscriber device retrieved from the subscriber configuration network node to the first network node, **characterised in that**:
the method is performed at a cache comprising a shared cache store which is accessible by each of the network nodes in the cluster of network nodes,
each node in the cluster of network nodes is also responsible for processing routing data relating to communication sessions conducted in the network, and by:
storing the subscriber configuration data for the subscriber device retrieved from the subscriber configuration network node in the shared cache store which is accessible by each of the network nodes in the cluster of network nodes;
receiving, from a second network node in the cluster of network nodes, a second subscriber configuration data request requesting subscriber configuration data for the subscriber device, the second node comprising a different node in the cluster of network nodes to the first network node;
in response to receipt of the second subscriber configuration data request, second determining that the shared cache store which is accessible by each of the network nodes in the cluster of network nodes does contain subscriber configuration data for the subscriber device;
in response to the second determination, retrieving subscriber configuration data for the subscriber device from the shared cache store which is accessible by each of the network nodes in the cluster of network nodes; and
transmitting the subscriber configuration data for the subscriber device retrieved from the shared cache store to the second network node.

## Patentansprüche

1. Verfahren zum Verarbeiten von Daten in einem Telekommunikationsnetzwerk, wobei das Netzwerk umfasst:
ein Cluster von Netzwerkknoten (106), die verantwortlich sind für das Durchführen von Registrierungsprozeduren für Teilnehmergeräte;
einen Teilnehmerkonfigurationsnetzwerkknoten (116), der verantwortlich ist für das Speichern von Teilnehmerkonfigurationsdaten für eine Mehrzahl von Teilnehmergeräten; und
einen Cache (112), der einen geteilten Cache-Speicher (114) zum Cachen von Teilnehmerkonfigurationsdaten für Teilnehmergeräte umfasst, wobei das Verfahren umfasst:
Empfangen, von einem ersten Netzwerkknoten in dem Cluster von Netzwerkknoten, einer ersten Teilnehmerkonfigurationsdatenanforderung, die Teilnehmerkonfigurationsdaten für ein Teilnehmergerät innerhalb des Netzwerks anfordert;
in Antwort auf den Empfang der ersten Teilnehmerkonfigurationsdatenanforderung, erstes Bestimmen, dass der geteilte Cache-Speicher keine Teilnehmerkonfigurationsdaten für das Teilnehmergerät enthält;
in Antwort auf die erste Bestimmung, Abrufen von Teilnehmerkonfigurationsdaten für das Teilnehmergerät von dem Teilnehmerkonfigurationsnetzwerkknoten;
Übertragen der Teilnehmerkonfigurationsdaten für das Teilnehmergerät, die von dem Teilnehmerkonfigurationsnetzwerkknoten abgerufen wurden, an den ersten Netzwerkknoten, **dadurch gekennzeichnet, dass**:
das Verfahren an einem Cache durchgeführt wird, der einen geteilten Cache-Speicher umfasst, auf den von jedem der Netzwerkknoten in dem Cluster von Netzwerkknoten aus zugegriffen werden kann;
wobei jeder Knoten in dem Cluster von Netzwerkknoten auch verantwortlich ist für das Verarbeiten von Routing-Daten, die sich auf Kommunikationssitzungen beziehen, die in dem Netzwerk durchgeführt werden, und durch:
Speichern der Teilnehmerkonfigurationsdaten für das Teilnehmergerät, die von dem Teilnehmerkonfigurationsnetzwerkknoten abgerufen wurden, in dem geteilten Cache-Speicher, auf den von jedem der Netzwerkknoten in dem Cluster von Netzwerkknoten aus zugegriffen werden kann;
Empfangen, von einem zweiten Netzwerkknoten in dem Cluster von Netzwerkknoten, einer zweiten Teilnehmerkonfigurationsdatenanforderung, die Teilnehmerkonfigurationsdaten für das Teilnehmergerät anfordert, wobei der zweite Knoten einen anderen Knoten als den ersten Netzwerkknoten in dem Cluster von Netzwerkknoten umfasst;
in Antwort auf den Empfang der zweiten Teilnehmerkonfigurationsdatenanforderung, zweites Bestimmen, dass der geteilte Cache-Speicher, auf den von jedem der Netzwerkknoten in dem Cluster von Netzwerkknoten aus zugegriffen werden kann, Teilnehmerkonfigurationsdaten für das Teilnehmergerät enthält;
in Antwort auf die zweite Bestimmung, Abrufen von Teilnehmerkonfigurationsdaten für das Teilnehmergerät von dem geteilten Cache-Speicher, auf den von jedem der Netzwerkknoten in dem Cluster von Netzwerkknoten aus zugegriffen werden kann; und
Übertragen der Teilnehmerkonfigurationsdaten für das Teilnehmergerät, die von dem geteilten Cache-Speicher abgerufen wurden, an den zweiten Netzwerkknoten.

2. Verfahren nach Anspruch 1, umfassend:
Empfangen, von dem Teilnehmerkonfigurationsnetzwerkknoten, einer Benachrichtigung, dass Teilnehmerkonfigurationsdaten für ein gegebenes Teilnehmergerät an dem Teilnehmerkonfigurationsnetzwerkknoten aktualisiert wurden;
in Antwort auf die Benachrichtigung, Abrufen der aktualisierten Teilnehmerkonfigurationsdaten für das gegebene Teilnehmergerät von dem Teilnehmerkonfigurationsnetzwerkknoten; und
Speichern der aktualisierten Teilnehmerkonfigurationsdaten für das gegebene Teilnehmergerät, die von dem Teilnehmerkonfigurationsnetzwerkknoten abgerufen wurden, in dem geteilten Cache-Speicher.

3. Verfahren nach Anspruch 2, wobei die benachrichtigten aktualisierten Teilnehmerkonfigurationsdaten zumindest eine Teilnehmerprofilinformation und ein oder mehrere initiale Filterkriterien umfassen.

4. Verfahren nach einem der vorangegangenen Ansprüche, wobei der geteilte Cache-Speicher einen geclusterten Cache-Speicher umfasst, wobei zumindest ein erster Teil der Teilnehmerkonfigurationsdaten in dem geclusterten Cache-Speicher in einem Speicher eines ersten Knotens in dem Telekommunikationsnetzwerk gespeichert ist, und zumindest ein zweiter, anderer Teil der Teilnehmerkonfigurationsdaten in dem geclusterten Cache-Speicher in einem Speicher eines zweiten, anderen Knotens in dem Telekommunikationsnetzwerk gespeichert ist.

5. Verfahren nach Anspruch 4, wobei der erste Knoten in dem Telekommunikationsnetzwerk einen gegebenen Knoten in dem Cluster von Netzwerkknoten umfasst und der zweite Knoten in dem Telekommunikationsnetzwerk einen anderen gegebenen Knoten in dem Cluster von Netzwerkknoten umfasst.

6. Verfahren nach Anspruch 4 oder 5, wobei Teilnehmerkonfigurationsdaten für das Teilnehmergerät in dem geclusterten Cache-Speicher in einem Speicher des Netzwerkknotens, in einem Speicher des weiteren Netzwerkknotens, oder in einem Speicher eines anderen Netzwerkknotens als dem Netzwerkknoten und dem weiteren Netzwerkknoten in dem Cluster von Netzwerkknoten gespeichert werden.

7. Verfahren nach einem der vorangegangenen Ansprüche, wobei die Teilnehmerkonfigurationsdaten Authentifizierungsdaten zur Verwendung beim Durchführen einer Authentifizierungsprozedur in Bezug auf das Teilnehmergerät umfassen.

8. Verfahren nach Anspruch 7, umfassend ein Bestimmen, ob der geteilte Cache-Speicher Authentifizierungsdaten für das Teilnehmergerät enthält,
wobei, in dem Fall des Bestimmens, dass der geteilte Cache-Speicher keine Authentifizierungsdaten für das Teilnehmergerät enthält, das Verfahren ein Abrufen von Authentifizierungsdaten für das Teilnehmergerät von dem Teilnehmerkonfigurationsnetzwerkknoten umfasst, wobei die übertragenen Teilnehmerkonfigurationsdaten zumindest die Authentifizierungsdaten für das Teilnehmergerät, die von dem Teilnehmerkonfigurationsnetzwerkknoten abgerufen wurden, umfasst,
wobei, in dem Fall des Bestimmens, dass der geteilte Netzwerkspeicher Authentifizierungsdaten für das Teilnehmergerät enthält, das Verfahren ein Abrufen von Authentifizierungsdaten für das Teilnehmergerät von dem geteilten Cache-Speicher umfasst, wobei die übertragenen Teilnehmerkonfigurationsdaten zumindest die Authentifizierungsdaten für das Teilnehmergerät, die von dem geteilten Cache-Speicher abgerufen wurden, umfasst.

9. Verfahren nach Anspruch 7 oder 8, wobei die Authentifizierungsprozedur ein oder mehrere eines Sitzung-Initiierungsprotokoll-, SIP, -Digest-Authentifizierungsprozedur und eines Internet-Protokoll-Multimedia-Subsystem-, IMS, -Authentifizierung und Schlüsselübereinkunft-, AKA, -Authentifizierung umfasst.

10. Verfahren nach einem der vorangegangenen Ansprüche, wobei die empfangene Teilnehmerkonfigurationsdatenanforderung mit einer Registrierung des Teilnehmergeräts mit dem Netzwerk assoziiert ist.

11. Verfahren nach einem der vorangegangenen Ansprüche, umfassend:
Empfangen, von einem weiteren Netzwerkknoten in dem Cluster von Netzwerkknoten, einer weiteren Teilnehmerkonfigurationsdatenanforderung, die mit einer erneuten Registrierung des Teilnehmergeräts mit dem Netzwerk assoziiert ist;
in Antwort auf den Empfang der weiteren Teilnehmerkonfigurationsdatenanforderung, Bestimmen, dass der geteilte Cache-Speicher Teilnehmerkonfigurationsdaten für das Teilnehmergerät enthält;
in Antwort auf die Bestimmung, Abrufen von Teilnehmerkonfigurationsdaten für das Teilnehmergerät von dem geteilten Cache-Speicher; und
Übertragen der Teilnehmerkonfigurationsdaten für das Teilnehmergerät, die von dem geteilten Cache-Speicher abgerufen wurden, an den weiteren Netzwerkknoten.

12. Verfahren nach Anspruch 11, wobei der weitere Netzwerkknoten einen anderen als den ersten Netzwerkknoten in dem Cluster von Netzwerkknoten umfasst.

13. Verfahren nach einem der Ansprüche 1 bis 10, umfassend ein Empfangen, von einem weiteren Netzwerkknoten in dem Cluster von Netzwerkknoten, einer weiteren Teilnehmerkonfigurationsdatenanforderung, die mit einer erneuten Registrierung des Teilnehmergeräts mit dem Netzwerk assoziiert ist, wobei keine Authentifizierungsprozedur für das Teilnehmergerät in Verbindung mit der erneuten Registrierung des Teilnehmergeräts mit dem Netzwerk durchgeführt wird.

14. Verfahren nach einem der vorangegangenen Ansprüche, wobei die Teilnehmerkonfigurationsdaten ein oder mehrere initiale Filterkriterien zur Verwendung in einer Kommunikationssitzungsaufbauanforderung, die sich auf das Teilnehmergerät bezieht, umfassen, wobei das Verfahren umfasst:
Bestimmen, ob der geteilte Cache-Speicher ein oder mehrere initiale Filterkriterien für das Teilnehmergerät enthält;
wobei, in dem Fall des weiteren Bestimmens, dass der geteilte Cache-Speicher nicht ein oder mehrere initiale Filterkriterien für das Teilnehmergerät enthält, das Verfahren des Weiteren ein Abrufen von ein oder mehreren initialen Filterkriterien für das Teilnehmergerät von dem Teilnehmerkonfigurationsnetzwerkknoten umfasst, wobei die übertragenen Teilnehmerkonfigurationsdaten zumindest die abgerufenen ein oder mehreren initialen Filterkriterien für das Teilnehmergerät umfassen,
wobei, in dem Fall des weiteren Bestimmens, dass der geteilte Cache-Speicher ein oder mehrere initiale Filterkriterien für das Teilnehmergerät enthält, das Verfahren ein Abrufen von ein oder mehreren initialen Filterkriterien für das Teilnehmergerät von dem geteilten Cache-Speicher umfasst, wobei die übertragenen Teilnehmerkonfigurationsdaten zumindest die erhaltenen ein oder mehreren initialen Filterkriterien für das Teilnehmergerät umfassen.

15. Verfahren nach Anspruch 14, wobei der noch weitere Netzwerkknoten einen anderen Knoten als den ersten Netzwerkknoten und/oder den weiteren Netzwerkknoten in dem Cluster von Netzwerkknoten umfasst.

16. Verfahren nach Anspruch 8 oder 14, wobei in dem Fall des Bestimmens, dass der geteilte Cache-Speicher Authentifizierungsdaten für das Teilnehmergerät enthält oder des weiteren Bestimmens, dass der geteilte Cache-Speicher ein oder mehrere initiale Filterkriteriendaten für das Teilnehmergerät enthält, das Verfahren ein Identifizieren, ob eine Ablaufzeit, die mit den Teilnehmerkonfigurationsdaten für das Teilnehmergerät, die von dem geteilten Cache-Speicher abgerufen wurden, assoziiert ist, abgelaufen ist, umfasst,
wobei, in dem Fall, dass die Identifizierung identifiziert, dass die Ablaufzeit, die mit den Teilnehmerkonfigurationsdaten für das Teilnehmergerät, die von dem geteilten Cache-Speicher abgerufen wurden, assoziiert ist, abgelaufen ist, das Verfahren ein Abrufen von nicht abgelaufenen Teilnehmerkonfigurationsdaten für das Teilnehmergerät von dem Teilnehmerkonfigurationsnetzwerkknoten umfasst, sowie ein Übertragen der nicht abgelaufenen Teilnehmerkonfigurationsdaten für das Teilnehmergerät, die von dem Teilnehmerkonfigurationsnetzwerkknoten abgerufen wurden, zu dem noch weiteren Netzwerkknoten, anstatt des Übertragens der abgelaufenen Teilnehmerkonfigurationsdaten für das Teilnehmergerät, die von dem geteilten Cache-Speicher abgerufen wurden, an den noch weiteren Netzwerkknoten.

17. Verfahren nach Anspruch 16, umfassend ein Speichern der nicht abgelaufenen Teilnehmerkonfigurationsdaten anstatt der abgelaufenen Teilnehmerkonfigurationsdaten in dem geteilten Cache-Speicher und Neusetzen der assoziierten Ablaufzeit für die gespeicherten nicht abgelaufenen Teilnehmerkonfigurationsdaten.

18. Verfahren nach einem der Ansprüche 14 bis 17, wobei die Kommunikationssitzungsaufbauanforderung eine Anforderung zum Aufbau einer ausgehenden Kommunikationssitzung für das Teilnehmergerät umfasst.

19. Verfahren nach einem der Ansprüche 14 bis 17, wobei die Kommunikationssitzungsaufbauanforderung eine Anforderung zum Aufbau einer eingehenden Kommunikationssitzung für das Teilnehmergerät umfasst.

20. Verfahren nach einem der vorangegangenen Ansprüche, wobei das Netzwerk ein Internet-Protokoll-Multimedia-System-, IMS, -Netzwerk umfasst, und der Teilnehmerkonfigurationsnetzwerkknoten einen Home-Teilnehmer-Server, HSS, umfasst.

21. Verfahren nach Anspruch 20, wobei die Teilnehmerkonfigurationsdaten von dem HSS über eine IMS Cx-Schnittstelle zwischen dem HSS und dem Cache erhalten wird.

22. Verfahren nach einem der vorangegangenen Ansprüche, wobei die Teilnehmerkonfigurationsdaten, die in dem Teilnehmerkonfigurationsnetzwerkknoten und/oder dem geteilten Cache-Speicher gespeichert sind, eines oder mehrere der folgenden Elemente umfassen:
Authentifizierungsdaten,
eine Nutzerprofilinformation, und
eine oder mehrere initiale Filterkriterien.

23. Verfahren nach einem der vorangegangenen Ansprüche, wobei ein oder mehrere der Registrierungsanforderung und der weiteren Registrierungsanforderung Sitzung-Initiierung-Protokoll-, SIP, -REGISTER-Nachrichten umfassen.

24. Verfahren nach einem der vorangegangenen Ansprüche, wobei ein oder mehrere der Knoten in dem Cluster von Netzwerkknoten Sitzung-Initiierung-Protokoll-, SIP, -Router-, -Dienst- und/oder -Registerknoten umfassen.

25. Verfahren nach einem der Ansprüche 14 bis 24, wobei die Kommunikationssitzungsaufbauanforderung ein oder mehrere einer Sitzung-Initiierung-Protokoll-, SIP, -INVITE-Nachricht, einer SIP-MESSAGE-Nachricht, einer SIP-SUBSCIBE-Nachricht und einer SIP-PUBLISH-Nachricht umfasst.

26. Vorrichtung zum Verarbeiten von Daten in einem Telekommunikationsnetzwerk, wobei die Vorrichtung einen geteilten Cache-Speicher (114) zum Cachen von Teilnehmerkonfigurationsdaten für Teilnehmergeräte umfasst, wobei die Vorrichtung ausgestaltet ist zum:
Empfangen, von einem ersten Netzwerkknoten in einem Cluster von Netzwerkknoten (106), die verantwortlich sind für das Durchführen von Registrierungsprozeduren für Teilnehmergeräte in dem Netzwerk, einer Teilnehmerkonfigurationsdatenanforderung, die Teilnehmerkonfigurationsdaten für ein Teilnehmergerät innerhalb des Netzwerks anfordert;
ersten Bestimmen, in Antwort auf den Empfang der ersten Teilnehmerkonfigurationsdatenanforderung, dass der geteilte Cache-Speicher keine Teilnehmerkonfigurationsdaten für das Teilnehmergerät enthält;
Abrufen, in Antwort auf die erste Bestimmung, von Teilnehmerkonfigurationsdaten für das Teilnehmergerät von einem Teilnehmerkonfigurationsnetzwerkknoten (116), der verantwortlich ist für das Speichern von Teilnehmerkonfigurationsdaten für eine Mehrzahl von Teilnehmergeräten; und
Übertragen der Teilnehmerkonfigurationsdaten für das Teilnehmergerät, die von dem Teilnehmerkonfigurationsnetzwerkknoten abgerufen wurden, an den ersten Netzwerkknoten, **dadurch gekennzeichnet, dass**:
auf den geteilten Cache-Speicher von jedem Netzwerkknoten in dem Cluster von Netzwerkknoten aus zugegriffen werden kann; und
jeder Knoten in dem Cluster von Netzwerkknoten auch verantwortlich ist für das Verarbeiten von Routing-Daten, die sich auf Kommunikationssitzungen beziehen, die in dem Netzwerk durchgeführt werden, und dass die Vorrichtung des Weiteren ausgestaltet ist zum:
Speichern der Teilnehmerkonfigurationsdaten für das Teilnehmergerät, die von dem Teilnehmerkonfigurationsnetzwerkknoten abgerufen wurden, in dem geteilten Cache-Speicher, auf den von jedem Netzwerkknoten in dem Cluster von Netzwerkknoten aus zugegriffen werden kann;
Empfangen, von einem zweiten Netzwerkknoten in dem Cluster von Netzwerkknoten, einer zweiten Teilnehmerkonfigurationsdatenanforderung, die Teilnehmerkonfigurationsdaten für das Teilnehmergerät anfordert, wobei der zweite Knoten einen anderen Knoten als den ersten Netzwerkknoten in dem Cluster von Netzwerkknoten umfasst;
in Antwort auf den Empfang der zweiten Teilnehmerkonfigurationsdatenanforderung, zweites Bestimmen, dass der geteilte Cache-Speicher, auf den von jedem Netzwerkknoten in dem Cluster von Netzwerkknoten aus zugegriffen werden kann, Teilnehmerkonfigurationsdaten für das Teilnehmergerät enthält;
in Antwort auf das zweite Bestimmen, Abrufen von Teilnehmerkonfigurationsdaten für das Teilnehmergerät von dem geteilten Cache-Speicher, auf den von jedem Netzwerkknoten in dem Cluster von Netzwerkknoten aus zugegriffen werden kann; und
Übertragen der Teilnehmerkonfigurationsdaten für das Teilnehmergerät, die von dem geteilten Cache-Speicher abgerufen wurden, an den zweiten Netzwerkknoten.

27. Computerprogrammprodukt, umfassend einen Satz von Instruktionen, welche, wenn sie von einem Computergerät ausgeführt werden, ausgestaltet sind zu bewirken, dass das Computergerät ein Verfahren zum Verarbeiten von Daten in einem Telekommunikationsnetzwerk durchführt, wobei das Netzwerk umfasst:
ein Cluster von Netzwerkknoten (106), die verantwortlich sind zum Durchführen von Registrierungsprozessen für Teilnehmergeräte;
einen Teilnehmerkonfigurationsnetzwerkknoten (116), der verantwortlich ist für das Speichern von Teilnehmerkonfigurationsdaten für eine Mehrzahl von Teilnehmergeräten; und
einen Cache (112), der einen geteilten Cache-Speicher (114) zum Cachen von Teilnehmerkonfigurationsdaten für Teilnehmergeräte umfasst, wobei das Verfahren umfasst:
Empfangen, von einem ersten Netzwerkknoten in dem Cluster von Netzwerkknoten, einer ersten Teilnehmerkonfigurationsdatenanforderung, die Teilnehmerkonfigurationsdaten für ein Teilnehmergerät innerhalb des Netzwerks anfordert;
in Antwort auf den Empfang der Teilnehmerkonfigurationsdatenanforderung, erstes Bestimmen, dass der geteilte Cache-Speicher keine Teilnehmerkonfigurationsdaten für das Teilnehmergerät enthält;
in Antwort auf die erste Bestimmung, Abrufen von Teilnehmerkonfigurationsdaten für das Teilnehmergerät von dem Teilnehmerkonfigurationsnetzwerkknoten;
Übertragen der Teilnehmerkonfigurationsdaten für das Teilnehmergerät, die von dem Teilnehmerkonfigurationsnetzwerkknoten abgerufen wurden, an den ersten Netzwerkknoten, **dadurch gekennzeichnet, dass**:
das Verfahren an einem Cache durchgeführt wird, der einen geteilten Cache-Speicher umfasst, auf den von jedem der Netzwerkknoten in dem Cluster von Netzwerkknoten aus zugegriffen werden kann,
wobei jeder der Knoten in dem Cluster von Netzwerkknoten auch verantwortlich ist für das Verarbeiten von Routing-Daten, die sich auf Kommunikationssitzungen beziehen, die in dem Netzwerk ausgeführt werden, und durch:
Speichern der Teilnehmerkonfigurationsdaten für das Teilnehmergerät, die von dem Teilnehmerkonfigurationsnetzwerkknoten abgerufen wurden, in dem geteilten Cache-Speicher, auf den von jedem der Netzwerkknoten in dem Cluster von Netzwerkknoten aus zugegriffen werden kann;
Empfangen, von einem zweiten Netzwerkknoten in dem Cluster von Netzwerkknoten, einer zweiten Teilnehmerkonfigurationsdatenanforderung, die Teilnehmerkonfigurationsdaten für das Teilnehmergerät anfordert, wobei der zweite Knoten einen anderen Knoten als den ersten Netzwerkknoten in dem Cluster von Netzwerkknoten umfasst;
in Antwort auf den Empfang der zweiten Teilnehmerkonfigurationsdatenanforderung, zweites Bestimmen, dass der geteilte Cache-Speicher, auf den von jedem der Netzwerkknoten in dem Cluster von Netzwerkknoten aus zugegriffen werden kann, keine Teilnehmerkonfigurationsdaten für das Teilnehmergerät enthält;
in Antwort auf die zweite Bestimmung, Abrufen von Teilnehmerkonfigurationsdaten für das Teilnehmergerät von dem geteilten Cache-Speicher, auf den von jedem der Netzwerkknoten in dem Cluster von Netzwerkknoten aus zugegriffen werden kann; und
Übertragen der Teilnehmerkonfigurationsdaten für das Teilnehmergerät, die von dem geteilten Cache-Speicher abgerufen wurden, an den zweiten Netzwerkknoten.

## Revendications

1. Procédé de traitement de données dans un réseau de télécommunications, le réseau comprenant :
une grappe de noeuds de réseau (106) chargés de mener des procédures d'enregistrement pour des dispositifs d'abonné ;
un noeud de réseau de configuration d'abonné (116) chargé de stocker des données de configuration d'abonné pour une pluralité de dispositifs d'abonné ; et
un cache (112) comprenant un stockage de cache partagé (114) pour mettre en cache des données de configuration d'abonné pour des dispositifs d'abonné, le procédé comprenant :
la réception, en provenance d'un premier noeud de réseau dans la grappe de noeuds de réseau, d'une première demande de données de configuration d'abonné demandant des données de configuration d'abonné pour un dispositif d'abonné à l'intérieur du réseau ;
en réponse à la réception de la première demande de données de configuration d'abonné, la première détermination selon laquelle le stockage de cache partagé ne contient pas de données de configuration d'abonné pour le dispositif d'abonné ;
en réponse à la première détermination, la récupération de données de configuration d'abonné pour le dispositif d'abonné à partir du noeud de réseau de configuration d'abonné ;
la transmission des données de configuration d'abonné pour le dispositif d'abonné récupérées à partir du noeud de réseau de configuration d'abonné au premier noeud de réseau, **caractérisé en ce que** :
le procédé est effectué au niveau d'un cache comprenant un stockage de cache partagé qui est accessible par chacun des noeuds de réseau dans la grappe de noeuds de réseau,
chaque noeud dans la grappe de noeuds de réseau est également chargé de traiter des données de routage relatives à des sessions de communications menées dans le réseau, et par :
le stockage des données de configuration d'abonné pour le dispositif d'abonné récupérées à partir du noeud de réseau de configuration d'abonné dans le stockage de cache partagé qui est accessible par chacun des noeuds de réseau dans la grappe de noeuds de réseau ;
la réception, en provenance d'un second noeud de réseau dans la grappe de noeuds de réseau, d'une seconde demande de données de configuration d'abonné demandant des données de configuration d'abonné pour le dispositif d'abonné, le second noeud consistant en un noeud différent dans la grappe de noeuds de réseau du premier noeud de réseau ;
en réponse à la réception de la seconde demande de données de configuration d'abonné, la seconde détermination selon laquelle le stockage de cache partagé qui est accessible par chacun des noeuds de réseau dans la grappe de noeuds de réseau contient des données de configuration d'abonné pour le dispositif d'abonné ;
en réponse à la seconde détermination, la récupération de données de configuration d'abonné pour le dispositif d'abonné à partir du stockage de cache partagé qui est accessible par chacun des noeuds de réseau dans la grappe de noeuds de réseau ; et
la transmission des données de configuration d'abonné pour le dispositif d'abonné récupérées à partir du stockage de cache partagé au second noeud de réseau.

2. Procédé selon la revendication 1, comprenant :
la réception, en provenance du noeud de réseau de configuration d'abonné, d'une notification selon laquelle des données de configuration d'abonné pour un dispositif d'abonné donné ont été mises à jour au niveau du noeud de réseau de configuration d'abonné ;
en réponse à la notification, la récupération des données de configuration d'abonné mises à jour pour le dispositif d'abonné donné à partir du noeud de réseau de configuration d'abonné ; et
le stockage des données de configuration d'abonné mises à jour pour le dispositif d'abonné donné récupérées à partir du noeud de réseau de configuration d'abonné dans le stockage de cache partagé.

3. Procédé selon la revendication 2, dans lequel les données de configuration d'abonné mises à jour notifiées comprennent au moins l'une d'informations de profil d'abonné et un ou plusieurs critères de filtre initiaux.

4. Procédé selon l'une quelconque des revendications précédentes, dans lequel le stockage de cache partagé comprend un stockage de cache en grappe dans lequel au moins une première partie des données de configuration d'abonné dans le stockage de cache en grappe est stockée dans une mémoire d'un premier noeud dans le réseau de télécommunications et au moins une seconde partie différente des données de configuration d'abonné dans le stockage de cache en grappe est stockée dans une mémoire d'un second noeud différent dans le réseau de télécommunications.

5. Procédé selon la revendication 4, dans lequel le premier noeud dans le réseau de télécommunications consiste en un noeud donné dans la grappe de noeuds de réseau et le second noeud dans le réseau de télécommunications consiste en un noeud donné différent dans la grappe de noeuds de réseau.

6. Procédé selon la revendication 4 ou 5, dans lequel des données de configuration d'abonné pour le dispositif d'abonné dans le stockage de cache en grappe sont stockées dans une mémoire du noeud de réseau, dans une mémoire du noeud de réseau supplémentaire ou dans une mémoire d'un noeud de réseau différent du noeud de réseau et du noeud de réseau supplémentaire dans la grappe de noeuds de réseau.

7. Procédé selon l'une quelconque des revendications précédentes, dans lequel les données de configuration d'abonné comprennent des données d'authentification destinées à être utilisées pour mener une procédure d'authentification par rapport au dispositif d'abonné.

8. Procédé selon la revendication 7, comprenant la détermination quant à savoir si le stockage de cache partagé contient des données d'authentification pour le dispositif d'abonné,
où, dans le cas où la détermination selon laquelle le stockage de cache partagé ne contient pas de données d'authentification pour le dispositif d'abonné, le procédé comprend la récupération de données d'authentification pour le dispositif d'abonné à partir du noeud de réseau de configuration d'abonné, les données de configuration d'abonné transmises comprenant au moins les données d'authentification pour le dispositif d'abonné récupérées à partir du noeud de réseau de configuration d'abonné,
où, dans le cas où la détermination selon laquelle le stockage de cache partagé contient des données d'authentification pour le dispositif d'abonné, le procédé comprend la récupération de données d'authentification pour le dispositif d'abonné à partir du stockage de cache partagé, les données de configuration d'abonné transmises comprenant au moins les données d'authentification pour le dispositif d'abonné récupérées à partir du stockage de cache partagé.

9. Procédé selon les revendications 7 ou 8, dans lequel la procédure d'authentification comprend une ou plusieurs d'une procédure d'authentification de condensé de protocole d'initiation de session, SIP, et d'une authentification d'accord d'authentification et de clé, AKA, de sous-système multimédia de protocole Internet, IMS.

10. Procédé selon l'une quelconque des revendications précédentes, dans lequel la demande de données de configuration d'abonné reçue est associée à l'enregistrement du dispositif d'abonné auprès du réseau.

11. Procédé selon l'une quelconque des revendications précédentes, comprenant :
la réception, en provenance d'un noeud de réseau supplémentaire dans la grappe de noeuds de réseau, d'une demande de données de configuration d'abonné supplémentaire associée au réenregistrement du dispositif d'abonné auprès du réseau ;
en réponse à la réception de la demande de données de configuration d'abonné supplémentaire, la détermination selon laquelle le stockage de cache partagé contient des données de configuration d'abonné pour le dispositif d'abonné ;
en réponse à la détermination, la récupération de données de configuration d'abonné pour le dispositif d'abonné à partir du stockage de cache partagé ; et
la transmission des données de configuration d'abonné pour le dispositif d'abonné récupérées à partir du stockage de cache partagé au noeud de réseau supplémentaire.

12. Procédé selon la revendication 11, dans lequel le noeud de réseau supplémentaire consiste en un noeud différent du premier noeud de réseau dans la grappe de noeuds de réseau.

13. Procédé selon l'une quelconque des revendications 1 à 10, comprenant la réception, en provenance d'un noeud de réseau supplémentaire dans la grappe de noeuds de réseau, d'une demande de données de configuration d'abonné supplémentaire associée au réenregistrement du dispositif d'abonné auprès du réseau, où aucune procédure d'authentification pour le dispositif d'abonné n'est menée en association avec le réenregistrement du dispositif d'abonné auprès du réseau.

14. Procédé selon l'une quelconque des revendications précédentes, dans lequel les données de configuration d'abonné comprennent un ou plusieurs critères de filtre initiaux destinés à être utilisés dans une demande d'établissement de session de communication relative au dispositif d'abonné, le procédé comprenant :
la détermination quant à savoir si le stockage de cache partagé contient un ou plusieurs critères de filtre initiaux pour le dispositif d'abonné ;
où, dans le cas où la détermination supplémentaire selon laquelle le stockage de cache partagé ne contient pas un ou plusieurs critères de filtre initiaux pour le dispositif d'abonné, le procédé comprend la récupération d'un ou plusieurs critères de filtre initiaux pour le dispositif d'abonné à partir du noeud de réseau de configuration d'abonné, les données de configuration d'abonné transmises comprenant au moins les un ou plusieurs critères de filtre initiaux récupérés pour le dispositif d'abonné,
où, dans le cas où la détermination supplémentaire selon laquelle le stockage de cache partagé contient un ou plusieurs critères de filtre initiaux pour le dispositif d'abonné, le procédé comprend la récupération d'un ou plusieurs critères de filtre initiaux pour le dispositif d'abonné à partir du stockage de cache partagé, les données de configuration d'abonné transmises comprenant au moins les un ou plusieurs critères de filtre initiaux récupérés pour le dispositif d'abonné.

15. Procédé selon la revendication 14, dans lequel le noeud de réseau encore supplémentaire consiste en un noeud différent du premier noeud de réseau et/ou du noeud de réseau supplémentaire dans la grappe de noeuds de réseau.

16. Procédé selon la revendication 8 ou 14, où dans le cas où la détermination selon laquelle le stockage de cache partagé contient des données d'authentification pour le dispositif d'abonné ou la détermination supplémentaire selon laquelle le stockage de cache partagé contient des données d'un ou plusieurs critères de filtre initiaux pour le dispositif d'abonné, le procédé comprend l'identification de si un temps d'expiration associé aux données de configuration d'abonné pour le dispositif d'abonné récupérées à partir du stockage de cache partagé a expiré,
où, dans le cas où l'identification identifiant que le temps d'expiration associé aux données de configuration d'abonné pour le dispositif d'abonné récupérées à partir d'un stockage de cache partagé a expiré, le procédé comprend la récupération de données de configuration d'abonné non expirées pour le dispositif d'abonné à partir du noeud de réseau de configuration d'abonné et la transmission des données de configuration d'abonné non expirées pour le dispositif d'abonné récupérées à partir du noeud de réseau de configuration d'abonné au noeud de réseau encore supplémentaire au lieu de la transmission des données de configuration d'abonné expirées pour le dispositif d'abonné récupérées à partir du stockage de cache partagé au noeud de réseau encore supplémentaire.

17. Procédé selon la revendication 16, comprenant le stockage des données de configuration d'abonné non expirées à la place des données de configuration d'abonné expirées dans le stockage de cache partagé et la réinitialisation du temps d'expiration associé pour les données de configuration d'abonné non expirées stockées.

18. Procédé selon l'une quelconque des revendications 14 à 17, dans lequel la demande d'établissement de session de communication comprend une demande pour établir une session de communication sortante à partir du dispositif d'abonné.

19. Procédé selon l'une quelconque des revendications 14 à 17, dans lequel la demande d'établissement de session de communication comprend une demande pour établir une session de communication entrante vers le dispositif d'abonné.

20. Procédé selon l'une quelconque des revendications précédentes, dans lequel le réseau comprend un réseau de sous-système multimédia de protocole Internet, IMS, et le noeud de réseau de configuration d'abonné comprend un serveur d'abonné résidentiel, HSS.

21. Procédé selon la revendication 20, dans lequel des données de configuration d'abonné sont récupérées à partir du HSS via une interface Cx IMS entre le HSS et le cache.

22. Procédé selon l'une quelconque des revendications précédentes, dans lequel les données de configuration d'abonné stockées dans le noeud de réseau de configuration d'abonné et/ou le stockage de cache partagé comprennent un ou plusieurs parmi :
des données d'authentification,
des informations de profil utilisateur, et
un ou plusieurs critères de filtre initiaux.

23. Procédé selon l'une quelconque des revendications précédentes, dans lequel une ou plusieurs de la demande d'enregistrement et de la demande d'enregistrement supplémentaire comprennent des messages REGISTER de protocole d'initiation de session, SIP.

24. Procédé selon l'une quelconque des revendications précédentes, dans lequel un ou plusieurs des noeuds dans la grappe de noeuds de réseau comprennent des noeuds de routeur, de service et/ou de registraire de protocole d'initiation de session, SIP.

25. Procédé selon l'une quelconque des revendications 14 à 24, dans lequel la demande d'établissement de session de communication comprend un ou plusieurs parmi un message de protocole d'initiation de session, SIP, INVITE, un message SIP MESSAGE, un message SIP SUBSCRIBE et un message SIP PUBLISH.

26. Appareil pour traiter des données dans un réseau de télécommunications, l'appareil comprenant un stockage de cache partagé (114) pour mettre en cache des données de configuration d'abonné pour des dispositifs d'abonné, l'appareil étant configuré pour :
recevoir, en provenance d'un premier noeud de réseau dans une grappe de noeuds de réseau (106) chargés de mener des procédures d'enregistrement pour des dispositifs d'abonné dans le réseau, une demande de données de configuration d'abonné demandant des données de configuration d'abonné pour un dispositif d'abonné à l'intérieur du réseau ;
déterminer en premier, en réponse à la réception de la première demande de données de configuration d'abonné, que le stockage de cache partagé ne contient pas de données de configuration d'abonné pour le dispositif d'abonné ;
récupérer, en réponse à la première détermination, des données de configuration d'abonné pour le dispositif d'abonné à partir d'un noeud de réseau de configuration d'abonné (116) chargé de stocker des données de configuration d'abonné pour une pluralité de dispositifs d'abonné ; et
transmettre les données de configuration d'abonné pour le dispositif d'abonné récupérées à partir du noeud de réseau de configuration d'abonné au premier noeud de réseau, **caractérisé en ce que** :
le stockage de cache partagé est accessible par chaque noeud de réseau dans la grappe de noeuds de réseau ; et
chaque noeud dans la grappe de noeuds de réseau est également chargé de traiter des données de routage relatives à des sessions de communications menées dans le réseau, et **en ce que** l'appareil est en outre configuré pour :
stocker les données de configuration d'abonné pour le dispositif d'abonné récupérées à partir du noeud de réseau de configuration d'abonné dans le stockage de cache partagé qui est accessible par chacun des noeuds de réseau dans la grappe de noeuds de réseau ;
recevoir, en provenance d'un second noeud de réseau dans la grappe de noeuds de réseau, une seconde demande de données de configuration d'abonné demandant des données de configuration d'abonné pour le dispositif d'abonné, le second noeud consistant en un noeud différent dans la grappe de noeuds de réseau du premier noeud de réseau ;
en réponse à la réception de la seconde demande de données de configuration d'abonné, déterminer en second que le stockage de cache partagé qui est accessible par chacun des noeuds de réseau dans la grappe de noeuds de réseau contient des données de configuration d'abonné pour le dispositif d'abonné ;
en réponse à la seconde détermination, récupérer des données de configuration d'abonné pour le dispositif d'abonné à partir du stockage de cache partagé qui est accessible par chacun des noeuds de réseau dans la grappe de noeuds de réseau ; et
transmettre les données de configuration d'abonné pour le dispositif d'abonné récupérées à partir du stockage de cache partagé au second noeud de réseau.

27. Produit de programme informatique comprenant un jeu d'instructions qui, lorsqu'il est exécuté par un dispositif informatisé, est configuré pour amener le dispositif informatisé à effectuer un procédé de traitement de données dans un réseau de télécommunications, le réseau comprenant :
une grappe de noeuds de réseau (106) chargés de mener des procédures d'enregistrement pour des dispositifs d'abonné ;
un noeud de réseau de configuration d'abonné (116) chargé de stocker des données de configuration d'abonné pour une pluralité de dispositifs d'abonné ; et
un cache (112) comprenant un stockage de cache partagé (114) pour mettre en cache des données de configuration d'abonné pour des dispositifs d'abonné, le procédé comprenant :
la réception, en provenance d'un premier noeud de réseau dans la grappe de noeuds de réseau, d'une première demande de données de configuration d'abonné demandant des données de configuration d'abonné pour un dispositif d'abonné à l'intérieur du réseau ;
en réponse à la réception de la première demande de données de configuration d'abonné, la première détermination selon laquelle le stockage de cache partagé ne contient pas de données de configuration d'abonné pour le dispositif d'abonné ;
en réponse à la première détermination, la récupération de données de configuration d'abonné pour le dispositif d'abonné à partir du noeud de réseau de configuration d'abonné ;
la transmission des données de configuration d'abonné pour le dispositif d'abonné récupérées à partir du noeud de réseau de configuration d'abonné au premier noeud de réseau, **caractérisé en ce que** :
le procédé est effectué au niveau d'un cache comprenant un stockage de cache partagé qui est accessible par chacun des noeuds de réseau dans la grappe de noeuds de réseau,
chaque noeud dans la grappe de noeuds de réseau est également chargé de traiter des données de routage relatives à des sessions de communications menées dans le réseau, et par :
le stockage des données de configuration d'abonné pour le dispositif d'abonné récupérées à partir du noeud de réseau de configuration d'abonné dans le stockage de cache partagé qui est accessible par chacun des noeuds de réseau dans la grappe de noeuds de réseau ;
la réception, en provenance d'un second noeud de réseau dans la grappe de noeuds de réseau, d'une seconde demande de données de configuration d'abonné demandant des données de configuration d'abonné pour le dispositif d'abonné, le second noeud consistant en un noeud différent dans la grappe de noeuds de réseau du premier noeud de réseau ;
en réponse à la réception de la seconde demande de données de configuration d'abonné, la seconde détermination selon laquelle le stockage de cache partagé qui est accessible par chacun des noeuds de réseau dans la grappe de noeuds de réseau contient des données de configuration d'abonné pour le dispositif d'abonné ;
en réponse à la seconde détermination, la récupération de données de configuration d'abonné pour le dispositif d'abonné à partir du stockage de cache partagé qui est accessible par chacun des noeuds de réseau dans la grappe de noeuds de réseau ; et
la transmission des données de configuration d'abonné pour le dispositif d'abonné récupérées à partir du stockage de cache partagé au second noeud de réseau.
